# EUROPEAN PATENT APPLICATION

(11) **EP 4 645 026 A1**
(43) Date of publication of application: **05.11.2025**
(21) Application number: 24173700.6
(22) Date of filing: 02.05.2024
(51) Int. Cl.: G05D 16/06

(54) **PRESSURE REDUCER ASSEMBLY**

(71) Applicant: Husqvarna AB, 561 82 Huskvarna (SE)
(72) Inventor: Renner, Thomas, 89079 ULM (DE)
(74) Representative: Finkele, Rolf

(57) **Abstract**

A pressure reducer assembly (300) for reducing a pressure of a fluid, preferably a liquid, more preferably water, comprising a pressure reducer body (310) defining at least a part of a pressure reducer chamber (320) along a central axis (X-X'), wherein the pressure reducer assembly (300) comprises an inlet section (322) and an outlet section (324) fluidly coupled with the inlet section (322), wherein the inlet section (322) is configured to allow an inflow of the fluid, and wherein the outlet section (324) is configured to allow an outflow of the fluid, a biasing means piston rod (332) having a center (Y) along the central axis (X-X'), connecting the inlet section (322) with the outlet section (324), and wherein the biasing means piston rod (332) is moveable with respect to the pressure reducer body (310), and a sealing element (336, 337) operatively coupled with the piston rod (332), wherein the sealing element (336, 337) is configured to form a sealing between an inner wall section (206, 207) of a fluid outflow device (200) and an outer surface (338) of the piston rod (332) at the outlet section (324), wherein the pressure reducer body (310) comprises a pressure compensation hole (340), wherein the pressure reducer hole (340) connects the pressure reducer chamber (320) and an outer surface (312) of the pressure reducer body (310), and wherein the pressure reducer assembly (300) further comprises a valve (328) at the inlet section (322), comprising a sealing seat (339) which is configured to selectively interact with an end of the biasing means piston rod (322) to allow and disallow a flow of fluid through the pressure reducer assembly (300). The pressure reducer assembly (300) is characterized in that the valve (328) is mounted to the pressure reducer body (310), and that the pressure reducer assembly (300) is configured to be, particularly toollessly, detachably mounted to the fluid outflow device (200) and a fluid inflow device (400) such that an air pressure inside of the pressure reducer chamber (320) is compensable via the pressure compensation hole (340) and complementary threads (202, 406) of the fluid outflow device (200) and the fluid inflow device (400).

## Description

### TECHNICAL FIELD

The present disclosure relates to a pressure reducer assembly. More specifically, the present disclosure relates to installation or mounting of the pressure reducer assembly in a fluid outflow device, such as a sprayer, for efficient working of the fluid outflow device.

### BACKGROUND

Application devices such as a sprayer that may find domestic and industrial applications and preferably applications in irrigation of larger planted areas or plant containers, may often require uniform or constant fluid pressures or spray patterns for efficient irrigation. However, the fluid received by the application devices from a fluid source may have non-uniform pressure approximately ranging from 3 bar to 12 bar. This may affect the consistency of the spray patterns produced by the application devices. To overcome the shortcomings due to the variable fluid pressure from the fluid source, pressure reducer assemblies are often mounted proximate an inlet part of the fluid application devices.

The pressure reducer assemblies reduce the pressure of the fluid received from the fluid source to a desired pressure level at the fluid application devices and further work to maintain the reduced pressure despite fluctuations in the fluid pressure of the fluid received from the fluid source.

The pressure reducer assemblies generally include a biasing means piston rod and a diaphragm operatively coupled with the piston rod in a pressure reducer chamber. For smooth working of the piston rod and the diaphragm, the pressure reducer further includes a pressure compensation hole. The pressure compensation hole ensures mobility of the piston rod and the diaphragm in an axial direction of the pressure reducer chamber. In the known pressure reducer assemblies, the pressure compensation hole is exposed to the surrounding environment and may thus be clogged with dirt, sand, or any other foreign element and may impair functional safety of the pressure reducer assembly by limiting the mobility of the piston rod and the diaphragm due to under pressure or over pressure caused in the pressure reducer chamber. Furthermore, in the known pressure reducer assemblies, the pressure compensation hole is formed in an outer wall of an application device in which the pressure reducer assembly is mounted. Therefore, the known fluid application devices may solely be used with a respective mounted specific pressure reducer assembly physically and/or geometrically adapted to the fluid application device. Additionally, the outer wall comprising the pressure compensation hole, is a part of the pressure reducer assembly. Hence, each application device needs a specifically adapted and formed pressure reducer assembly. Therefore, an improved pressure reducer assembly is required that may at least partially overcome the above-mentioned further drawbacks. Particularly, an improved and universally applicable pressure reducer assembly may be provided which may be easily retrofitted also to already existing application devices and which may not geometrically interact with the application device. At the same time, the pressure reducer assembly should be less susceptible to contamination. Therefore, a universally applicable pressure reducer assembly with an extended service life may be provided.

An example of a pressure reducer is provided in Chinese utility model CN 204512569 U (hereinafter referred to as '569 reference). The '569 reference provides a filter pressure reducer that includes a pressure reducer and a filter equipment. The pressure reducer includes a main part, a regulator, and a valve cap. The valve cap outer wall is equipped with a strengthening rib and a pressure regulating hole, the inside of which is equipped with the filter screen. However, the ' 569 reference requires an additional attachment such as the filter screen which may complicate the maintenance process of the pressure reducer assembly and further increase an overall cost of production of the pressure reducer assembly. Additionally, the '569 reference requires a specifically formed application device adapted to conform to one specific pressure reducer.

Thus, there is a need of a simple, improved, and intelligent pressure reducer assembly providing an extended service life with an increased maintenance interval and which may beused with different fluid application devices.

A further example of a pressure reducer is provided in US patent application US 2018/0253113 A1 (hereinafter referred to as '113 reference). The '113 shows a pressure regulator including a housing with an inlet flow passage and an outlet flow passage, a plunger reciprocally mounted in the housing and including a plunger flow passage having an axis offset from an axis of the inlet flow passage, and a stationary valve seat fixed to the housing and positioned between the inlet flow passage and an inlet to the flow passage of the plunger, wherein the valve seat is configured to receive and abut the inlet of the flow passage pf the plunger. Further, a side of a diaphragm opposite to the outlet flow passage may be at an ambient pressure, which is achieved by venting a liner to the atmosphere through vent holes in the liner and through a torturous path provided by a retainer's buttress thread. However, the `113 reference requires a specifically formed housing which at the same time comprises as a part of itself the valve seat and therefore an important part of the pressure reducer. Hence, the `113 reference requires a specifically formed application device adapted to conform to one specific pressure reducer.

Thus, there is a need of a simple, improved and intelligent pressure reducer assembly providing an extended service life with an increased maintenance interval, and which at the same time may be used with different fluid application devices.

### SUMMARY

In view of the above, it is an objective of the present invention to solve or at least reduce the drawbacks discussed above. The objective is at least partially achieved by a pressure reducer assembly for reducing a pressure of a fluid, preferably a liquid and more preferably water. The pressure reducer assembly includes a pressure reducer body that defines at least a part of a pressure reducer chamber along a central axis. The pressure reducer assembly further includes an inlet section and an outlet section fluidly coupled with the inlet section. The inlet section is configured to allow an inflow of the fluid, and the outlet section is configured to allow an outflow of the fluid. A biasing means piston rod having a center along the central axis connects the inlet section with the outlet section. The piston rod is moveable with respect to the pressure reducer body. A sealing element is operatively coupled with the piston rod such that the sealing element is configured to form a sealing between an inner wall section of a fluid outflow device and an outer surface of the piston rod at the outlet section. The pressure reducer assembly further includes a pressure compensation hole, wherein the pressure compensation hole connects the pressure reducer chamber and an outer surface of the pressure reducer body. The pressure reducer assembly further comprises a valve at the inlet section, comprising a sealing seat which is configured to selectively interact with an end of the biasing means piston rod to disallow a flow of fluid through the pressure reducer assembly. The pressure reducer assembly is characterized in that the valve is mounted to the pressure reducer body, wherein the pressure assembly is configured to be, particularly toollessly, detachably mounted to the fluid outflow device and a fluid inflow device such that an air pressure inside of the pressure reducer chamber is compensable, particularly exclusively, via the pressure compensation hole and complementary threads of the fluid outflow device and the fluid inflow device.

Thus, the present disclosure provides an improved pressure reducer assembly that may be simple in construction and further may be easy to install or mount in the application device. The pressure reducer assembly may be advantageously designed in a manner such that the pressure compensation hole is not directly exposed to an external environment. The pressure compensation hole is enclosed or covered by the fluid outflow device and the fluid inflow device, which may thereby provide protection to the pressure compensation hole against foreign elements present in the surroundings or the external environment of the fluid outflow device and the fluid inflow device. The pressure compensation hole may thus be prevented from clogging due to dirt, sand, etc. The pressure compensation hole, thereby allows or ensures unobstructed mobility of the piston rod in the pressure reducer chamber and hence the efficient working of the pressure reducer assembly. Additionally, the pressure reducer assembly may be improved and universally applicable to be easily retrofitted also to already existing application devices and may not geometrically interact with the application device in which the pressure reducer assembly is mounted. Hence, the pressure reducer assembly may be provided with a simple construction, an extended service life, an increased maintenance interval as well as may be retrofitted to different already existing application devices.

The pressure reducer assembly comprising an inlet section and an outlet section according to the present invention may denote that the pressure reducer chamber is defined respectively formed between the inlet section of the pressure reducer assembly and the outlet section of the pressure reducer assembly, wherein the outlet section and the inlet section are fluidly coupled with each other, and wherein the inlet section is configured to allow an inflow of the fluid into the pressure reducer assembly, and the outlet section is configured to allow an outflow of the fluid from the pressure reducer assembly.

The fluid outflow device according to the present invention may be configured to guide the fluid away from the pressure reducer assembly, particularly away from the outlet section of the pressure reducer chamber. Further, the fluid outflow device may be configured to guide the fluid from the outlet section of the pressure reducer chamber to an outlet of the fluid outflow device, where the fluid may be applicable to an environment. The fluid outflow device according to the present invention may for example be a sprayer, a sprinkler, a shower head, a mist shower head, a spray gun or a drip-irrigation component. Furthermore, the fluid outflow device may for example be a coupling nipple of a water socket.

The fluid inflow device according to the present invention may be configured to guide the fluid to the pressure reducer assembly, particularly to the inlet section of the pressure reducer chamber. Further, the fluid inflow device may be configured to guide the fluid from an inlet of the fluid inflow device, e.g., a fluid connection such as a hose or a pipe line, to an inlet section of the pressure reducer chamber. The fluid inflow device according to the present invention may for example be a connector nipple of a water application device or a water supply line of a water socket.

The pressure reducer assembly further comprising a valve at the inlet section, wherein the valve is mounted to the pressure reducer body may denote that the valve and therefore the sealing seat of the valve, is a part of the pressure reducer assembly. Hence, the pressure reducer assembly may be mounted, particularly toollessly mounted, to any fluid outflow device without geometrically amending respectively changing the fluid outflow device or the fluid inflow device. All parts necessary for pressure reduction may be integrated within the pressure reducer assembly. Additionally, the pressure reducer assembly may be shaped compact.

According to the present application the term outer respectively inner may be used with respect to the central axis extending through a center of the pressure reducer assembly and between an inlet section and an outlet section of the pressure reducer assembly. Further, each of the different components of the pressure reducer assembly comprising an inner cavity or hollow area may comprise a respective inner and outer surface, wall, etc.

The pressure compensation hole connecting the pressure reducer chamber and an outer surface of the pressure reducer body according to the present application may denote that an air channel may be formed inside of the pressure reduce body. Particularly, the pressure compensation hole may have a round cross-section and may extend in a radial direction with respect to the central axis. It should be emphasized that the pressure compensation hole may extend angular to the radial direction with respect to the central axis, dependent on a desired application. Further, it should be emphasized that the pressure compensation hole may comprise a non-circular cross-section, e.g., a triangular, a drop-shaped or a rectangular cross section.

The valve at the inlet section of the pressure reducer assembly is configured to selectively allow and disallow a flow of fluid through the pressure reducer assembly. The valve may selectively allow the passage of fluid to the outlet section such as to maintain a constant output pressure of the pressure reducer assembly. The piston rod may oscillate to momentarily respectively selectively block the supply of fluid from the inlet section towards the outlet section.

According to the present invention, the pressure reducer assembly is configured such that, when the pressure reducer assembly is mounted to the fluid outflow device and the fluid inflow device, an air pressure inside of the pressure reducer chamber is compensable, particularly exclusively, via the pressure compensation hole as well as complementary threads of the fluid outflow device and the fluid inflow device. Particularly, the clearance between the threads may serve as a part of a passage for air to flow in and out of the pressure reducer chamber. Furthermore, the clearance between the outer surface of the pressure reducer body and the inner surface of the fluid outflow device respectively the fluid inflow device, may serve as a further part of the passage for air. Thereby, it may be ensured that no dirt and foreign objects may enter into the pressure compensation hole. Additionally, each of the two aforementioned clearances are so small that a watertight sealing between the pressure reducer assembly and the fluid outflow device and/or the fluid inflow device may be ensured. Additionally, the pressure reducer assembly may be retrofitted respectively mounted to different fluid inflow devices and/or fluid outflow devices without any geometrical limitations imposed by outer pressure compensation bores in the fluid inflow device respectively the fluid outflow device.

According to an exemplary embodiment of the present invention, the pressure reducer body, particularly the outer surface of the pressure reducer body, is configured to be, particularly screw-lessly, detachably mountable to the fluid outflow device, particularly a water application device, and/or is configured to be, particularly screw-lessly, detachably mountable to a fluid inflow device.

Therefore, the pressure reducer body may be quickly, and ergonomically mounted by clamping the pressure reducer assembly in-between the fluid outflow device and the fluid inflow device. At the same time, air may flow between the outer surface of the pressure reducer body and an inner surface of the fluid outflow device and/or the fluid inflow device around at least part of the circumference of the pressure reducer body, for enabling the pressure compensation in the pressure reducer chamber.

According to an exemplary embodiment of the present invention, the pressure reducer body comprises the outer surface and an inner surface, and the pressure reducer body extends between the outer surface and the inner surface as a solid body and without a void or a larger opening.

The pressure reducer body extends between the outer surface and the inner surface as a solid body and without a void or a larger opening according to the present invention may denote that the outer body respectively shell of the pressure reducer body may be formed as the solid body which comprises neither internal voids nor openings respectively cavities. Instead the pressure reducer body may comprise the outer shell which may have the pressure reducer hole formed therein and extending between the inner surface and the outer surface. With other words, the pressure reducer hole may be the only opening provided in the shell respectively surrounding shape of the pressure reducer body.

According to an exemplary embodiment of the present invention, the outer surface of the pressure reducer body is formed smooth and without a thread. Therefore, the pressure reducer body may be quickly, and ergonomically mounted by clamping the pressure reducer assembly in-between the fluid outflow device and the fluid inflow device. At the same time, air may flow between the outer surface of the pressure reducer body and an inner surface of the fluid outflow device and/or the fluid inflow device around at least part of the circumference of the pressure reducer body, for enabling the pressure compensation in the pressure reducer chamber.

However, it should be emphasized that, according to another exemplary embodiment of the present invention, at least one pressure compensation groove may be formed in the outer surface of the pressure reducer body. However, at the same time the remaining outer surface of the pressure reducer body may be formed smooth. The pressure reducer groove may provide an improved pressure compensation through the pressure compensation hole also with different manufacturing tolerances. The pressure compensation groove may particularly extend between the pressure compensation hole and a axial end of the pressure reducer body next to the inlet section and extend parallel to the central axis. However, it may be emphasized that the pressure compensation groove may extend spirally around the pressure reducer body, in a zig zag shape or an undulated shape.

According to an exemplary embodiment of the present disclosure, a spring element is the biasing means. The spring element may be functionally coupled with the piston rod and may be configured to allow an axial movement of the piston rod along the central axis. The spring element may further be a compression spring, a disc spring, or any other known type of spring commonly used to operate the piston rod.

According to an exemplary embodiment of the present invention, the spring element is a disc spring. By providing the spring element as a disc spring, the pressure reduce assembly may comprise a decreased axial extension and therefore a decreased axial receiving space. Hence, fluid outflow devices with small respectively decreased lengths may be equipped with the pressure reduce assembly.

According to an exemplary embodiment of the present invention, the sealing element is configured to form an axial sealing between the inner wall section, particularly an axial sealing protrusion, of the fluid outflow device and the outer surface of the piston rod at the outlet section, and/or the sealing element is a diaphragm.

The axial sealing protrusion according to the preset application may denote a part of the inner wall section which protrudes radially towards a central longitudinal axis of the fluid outflow device, and thereby forms an axial sealing surface for the sealing element being a diaphragm. Particularly, the axial sealing protrusion of the inner wall section protrudes perpendicular to the central longitudinal axis of the fluid outflow device.

The sealing element may reliably disallow a backflow of fluid past the outlet section. Thereby, possible leakages may be eliminated, and the overall efficiency of the pressure reducer assembly installed in/mounted to the fluid outflow device and/or the fluid inflow device may be improved. Further, the sealing may prevent ingress of air in the outlet section, thereby preventing mixing of air drawn-in from the pressure compensation hole with the fluid.

By providing the pressure reducer assembly comprising a diaphragm as the sealing element and a disc spring as the spring element, a compact pressure reducer assembly which requires a small axial mounting area may be providable.

According to a further exemplary embodiment of the present invention, the spring element is a compression spring. A compression spring is a standardized component which is cheap and at the same time well approved. Therefore, a cost-efficient and reliable pressure reducer assembly may be providable.

According to a further exemplary embodiment of the present invention, the sealing element is configured to form a radial sealing between the inner wall section, particularly a planar inner surface, of the fluid outflow device and the outer surface of the piston rod at the outlet section of the pressure reducer assembly, and/or the sealing element is an O-ring. The O-ring and/or the described radial sealing may prevent ingress of air in the outlet section. Thereby, a mixing of air drawn-in from the pressure compensation hole with the fluid may be prevented. The O-ring may allow a reliable and cost-efficient way to provide a sealing.

By providing the pressure reducer assembly comprising an O-ring as the sealing element and a compression spring as the spring element may allow to provide a pressure reducer assembly made of standardized components. Hence, a reliable and cost-efficient pressure reducer assembly may be providable.

According to a further exemplary embodiment of the present invention, the sealing element is configured to form an axial sealing between the inner wall section, particularly an axial sealing protrusion, of the fluid outflow device and the outer surface of the piston rod at the outlet section, and/or the sealing element is a diaphragm. Additionally, the spring element is a compression spring.

By providing the pressure reducer assembly comprising a diaphragm as the sealing element and a compression spring as the spring element may allow to provide a reliable and well-approved spring element with an improved leakage-eliminating sealing element. Thereby, an overall efficiency of the pressure reducer assembly installed in the application device may be improved.

According to an exemplary embodiment of the present disclosure, the disc spring supports the diaphragm. Thereby, an unintentional deformation of the diaphragm, which may cause an insufficient sealing, may be reliably prevented.

According to an exemplary embodiment of the invention, the disc spring supports the diaphragm over substantially an entire radial extend of the diaphragm. Thereby, an improved support of the diaphragm may be provided.

According to an exemplary embodiment of the present invention, a shape of the disc spring substantially corresponds to a shape of the diaphragm. The disc spring may prevent the diaphragm from slipping out due to fluid force.

According to an exemplary embodiment of the present disclosure, the pressure reducer assembly is configured to generate a constant output pressure of at least 1.5 bar, particularly of at least 3 bar, more particularly of substantially 4 bar. The constant output pressure may be pre-determined and/or pre-set during the manufacturing of the pressure reducer assembly according to the application requirements of the fluid outflow device and/or the fluid inflow device to which the pressure reducer assembly is mounted. Alternatively, the pre-setting of the constant output pressure may be made during an installation respectively a mounting of the pressure reducer assembly in the fluid outflow device and/or the fluid inflow device.

According to a further exemplary embodiment of the present invention, the pressure reducer body comprises a collar having a larger radial extend than the pressure reducer body. The collar is formed at an axial end of the pressure reducer body adjacent to the outlet section of the pressure reducer assembly. Further, a groove is formed in the collar, wherein the groove extends over the entire radial extend of the collar, and the groove is formed to communicate with the complementary threads of the fluid outflow device and the fluid inflow device. Thereby, if the pressure reducer assembly may be more reliably mounted to the fluid outflow device, e.g., when the pressure reducer assembly is mounted to a water socket, the pressure reducer may be safely and reliably mounted to the water socket.

The collar according to the present invention may be formed such that the pressure reducer assembly may be reliably and easily mounted to the fluid outflow device or the fluid inflow device. The groove is formed in the collar to communicate with the complementary threads of the fluid inflow device and the fluid outflow device when the pressure reducer assembly is mounted into the fluid outflow device or the fluid inflow device.

According to a further aspect of the present invention, a fluid application assembly is provided. The fluid application assembly comprises an above-described pressure reducer assembly, the fluid outflow device configured to guide an outflow of the fluid from the pressure reducer assembly, and the fluid inflow device configured to couple the fluid outflow device to a fluid connection, particularly a hose or a pipe line, and configured to guide an inflow of the fluid to the pressure reducer assembly. The fluid outflow device is particularly a sprayer, a sprinkler, a shower head, a mist shower head, a spray gun, a drip-irrigation component or a coupling nipple of a water socket. The fluid inflow device is particularly a connector nipple or a water supply line of a water socket. The pressure reducer assembly is detachably mounted, preferably screw-less detachably mounted, into the inlet part of the fluid outflow device such that the outlet section of the pressure reducer assembly is fluidically coupled to the inlet part of the fluid outflow device. The pressure reducer assembly of the present disclosure may find its application with the fluid outflow device respectively the fluid inflow device usable for gardening operations. Therefore, a gardening tool may be provided with an increased service life and with which water may be spread more evenly. However, the fluid outflow device respectively the fluid inflow device may be usable for any other industrial or domestic application.

According to an exemplary embodiment of the present invention, the pressure reducer assembly is detachably mounted, preferably screw-less detachably mounted, into the inlet part of the fluid outflow device such that the outlet section of the pressure reducer assembly is fluidically coupled to an inlet of the fluid outflow device. The pressure reducer assembly is disposed proximate to the inlet of the fluid outflow device such that the fluid outflow device receives the fluid at a constant reduced pressure to efficiently carry out its operation, such as to produce a constant spray pattern or to supply water at a constant pressure to a hose connected to a water socket. Additionally, by screw-less detachably mounting, the pressure reducer assembly may be retrofitted to an already owned fluid outflow device respectively fluid inflow device, particularly an already owned gardening tool, e.g., without the need to use any tool.

According to an exemplary embodiment of the present invention, the fluid application assembly further comprises a further sealing element, particularly an axial flat sealing. The further sealing element is clamped between a sealing surface of the fluid inflow device and a substantially planar axial inlet end face of the pressure reducer body. The further sealing element may prevent leakage of fluid guided via the fluid inflow device to the pressure reducer assembly, and ensures efficient working of the pressure reducer assembly and thus the fluid outflow device on which the pressure reducer assembly is mounted. Thereby, the fluid application assembly may be provided with a retrofittable pressure reducer assembly. According to an exemplary embodiment of the present invention, the fluid outflow device is mounted, particularly screwed, to the fluid inflow device such that an axial inlet end face of the pressure reducer body seals with a sealing surface of the fluid inflow device via a further sealing element, more particularly via an axial flat seal, wherein an axial air gap is formed between the axial inlet end face of the pressure reducer body and an axial inlet end face of the fluid outflow device. The axial inlet end face of the pressure reducer body and the axial end face of the fluid outflow device are axially distanced from each other, particularly by substantially 1 mm, wherein a pressure compensation is established from the pressure compensation hole via the axial air gap and the complementary threads of the fluid outflow device and the fluid inflow device. Thereby, an ingress of foreign elements into the pressure reducer chamber may be reduced and therefore a service life of the pressure reducer assembly and also the entire fluid application assembly may at least be increased. Further, potential noise produced during the pressure compensation may be reduced. A length of the pressure reducer assembly and a length of the inlet part of the fluid outflow device are complement each other such that when the pressure reducer assembly is inserted into the inlet section of the fluid outflow device, the air gap is determined by the distance of the axial end face of the fluid outflow device and the axial inlet end face of the pressure reducer body.

According to an exemplary embodiment of the present invention, an outer surface of the fluid outflow device respectively the fluid inflow device is formed without a pressure compensation hole. Thereby, it may be inhibited that unwanted foreign elements clog the pressure compensation hole and affect the working of the pressure reducer assembly mounted in the fluid outflow device. Additionally, an already owned conventional fluid outflow device may be used in the fluid application assembly.
According to a further exemplary embodiment of the present invention, the fluid outflow device is mounted, particularly screwed, to the fluid inflow device such that a collar of the pressure reducer body is axially clamped between an axial end face of the fluid inflow device and the sealing element, wherein the collar has a larger radial extend than an outer surface of the pressure reducer body, and is formed at an axial end of the pressure reducer body adjacent to the outlet section of the pressure reducer chamber. A groove is formed in the collar and extends over the entire radial extend of the collar, wherein the groove communicates with the complementary threads of the fluid outflow device and the fluid inflow device. A pressure compensation is established from the pressure compensation hole via the groove and the complementary threads of the fluid outflow device and the fluid inflow device.

According to the present invention, the pressure reducer assembly may be reliably mounted to a fluid application assembly and a constant pressure may be reliably providable. Furthermore, an ingress of foreign elements into the pressure reducer chamber may be reduced and therefore a service life of the pressure reducer assembly and also the entire fluid application assembly may at least be increased. Further, potential noise produced during the pressure compensation may be reduced.

Before discussing the invention with the help of the drawings, the invention will be briefly discussed in general. A compact pressure reducer assembly may be provided. The pressure reducer assembly may be used for various fluid inflow devices respectively fluid outflow devices, such as, but not limited to, a sprayer, a sprinkler, a shower head, a mist shower head, a spray gun, a water socket or a drip-irrigation component. The pressure reducer assembly may either be located directly in the area of the fluid inflow device, such as the connector nipple configured for coupling the fluid outflow device to the fluid connection, or the pressure reducer assembly may be held by the fluid inflow device. The pressure reducer assembly may be used in OGS (Original Gardena System) connecting devices.

The compact pressure reducer assembly according to the present invention may have a pollution proof technology. The pressure reducer assembly according to the present invention may relieve components of the fluid application assembly, e.g., the irrigation assembly, such as shower plate or valve at high pressure of the magnitude greater than 10 bar. The pressure reducer assembly according to the present invention may provide constant spray pattern over the entire pressure range from 3 bar to 12 bar. The pressure reducer assembly may be invisibly integrated in the fluid outflow device, e.g., the application device, or held in position by the fluid inflow device, e.g., the connecting element. Further, the pressure reducer assembly according to the present invention may work without a vent bore in a housing of a fluid outflow device, i.e. housing of , e.g., a shower. Therefore, the fluid inflow device respectively the fluid outflow device may remain unchanged. Additionally, the fluid inflow device respectively the fluid outflow device may also be used with dismantled (without) a pressure reducer assembly (e.g., if the fluid outflow device respectively the fluid inflow device is used with only little available line pressure). The pressure reducer assembly according to the present invention may be retrofitted to an existing fluid outflow device and/or an existing fluid inflow device. The pressure reducer assembly according to the present invention may allow gentle opening of the valve even at 12 bar inlet pressure because solely 3 bar are present at a valve assembly. Pressure shocks on the valve assembly and the housing of the fluid outflow device and/or the fluid inflow device may be prevented. Therefore, cracks in the housing may be inhibited and recyclated respectively recycled plastics may be used for manufacturing the housing. Additionally, a thinner wall thickness of the fluid outflow device respectively fluid inflow device may be possible. The pressure reducer assembly according to the present invention may include simple and cost-effective stamped parts. Additionally, the pressure reducer assembly according to the present invention may serve as a frost protection element or make existing frost compensator superfluous. Further, a cost-neutral production may be possible.

According to an exemplary embodiment of the invention, the valve comprises a seal formed as an O-ring. Thereby, the piston rod is sealed radially with an O-ring when the valve is closed. Hence, the seal may be substantially 100% tight even when the valve is switched off or if zero flow is applied, because a maximum pressure may be measured in front (upstream) of the valve (e.g., 3 bar even at 12 bar inlet pressure).

According to a further exemplary embodiment, the pressure reducer assembly may include a slotted disc spring as the spring element and a silicone flat diaphragm as the sealing element. Further, the pressure reducer assembly according to an exemplary embodiment of the invention, may include the pressure compensation hole only on the pressure reducer body. Additionally, the axial inlet end face of the pressure reducer body may stand approximately 1 mm above the axial end face of the fluid outflow device. The fluid inflow device (OGS nipple) presses a flat seal on the pressure reducer body. Hence, the flat seal seals only on the pressure reducer body and not on a conventional sealing edge of the fluid outflow device. Further, the diaphragm is clamped axially between the axial sealing protrusion of the housing of the fluid outflow device and the pressure reducer body and may therefore seal substantially 100%. Therefore, the pressure compensation may take place through flank clearance between a plurality of threads on the fluid outflow device, plurality of threads on the fluid inflow device and the axial air gap between the axial end face of the fluid outflow device and the further sealing element. In absence of the pressure reducer assembly, the fluid outflow device and the fluid inflow device (e.g., OGS connector) may be assembled, and the further sealing element seals back on an axial end face of the fluid inflow device.

According to a further exemplary embodiment of the preset invention, a diaphragm piston rod assembly may be replaced with a piston rod assembly with a radial sealing element, e.g., a lip seal, quad ring or O-ring. Further, a disc spring element may be replaced with a compression spring element.

Additionally, the pressure reducer body may support itself directly on the diameter jump on an inner wall section of the fluid outflow device. The diameter jump may be an area where the fluid outflow device possesses a change in its diameter. The diameter jump may be the edge on an inner wall surface of the fluid outflow device described above.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** shows a partial cross-section view of a fluid application assembly in accordance with an exemplary embodiment of the present disclosure;
**FIG. 2** shows a cross-section view of a fluid coupling between a fluid outflow device and a fluid inflow device in accordance with an exemplary embodiment of the present disclosure;
**FIG. 3** shows an exploded view of an encircled part of **FIG. 1** in accordance with an exemplary embodiment of the present disclosure;
**FIGS. 4A** and **4B** show cross-section views of a fluid coupling between a fluid outflow device, a pressure reducer assembly and a fluid inflow device in accordance with an exemplary embodiment of the present disclosure;
**FIGS. 5A** and **5B** show cross-section views of a pressure reducer assembly with a piston rod exhibiting an upward stroke and a downward stroke respectively in accordance with an exemplary embodiment of the present disclosure;
**FIG. 6** shows a cross-section view of **FIG. 4A** illustrating a pressure compensation route in accordance with an exemplary embodiment of the present disclosure;
**FIG. 7** shows a cross-section view of a pressure reducer assembly mounted in a fluid application assembly in accordance with an exemplary embodiment of the present disclosure;
**FIG. 8A** shows a perspective view of a fluid coupling between a fluid outflow device and a fluid inflow device in accordance with an exemplary embodiment of the present disclosure;
**FIG. 8B** shows a cross-section view of a pressure reducer assembly mounted to the fluid outflow device and the fluid inflow device of **FIG. 8A** in accordance with an exemplary embodiment of the present disclosure;
**FIG. 8C** shows an exploded view of **FIG. 8B** in accordance with an exemplary embodiment of the present disclosure;
**FIG. 8D** shows a further cross-section view of a pressure reducer assembly mounted to the fluid outflow device and the fluid inflow device of **FIG. 8A** in accordance with an exemplary embodiment of the present invention;
**FIG. 9A** shows a cross-section view of a pressure reducer assembly mounted to a water socket in accordance with an exemplary embodiment of the present disclosure;
**FIG. 9B** shows an exploded view of **FIG. 9A** in accordance with an exemplary embodiment of the present disclosure;
**FIG. 9C** shows a partially exploded view of **FIG. 9A** in accordance with an exemplary embodiment of the present disclosure;
**FIG. 10A** shows a cross-section view of a pressure reducer assembly in accordance with an exemplary embodiment of the present disclosure; and
**FIG. 10B** shows a side cross-section view of a pressure reducer assembly in accordance with an exemplary embodiment of the present disclosure.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention may be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

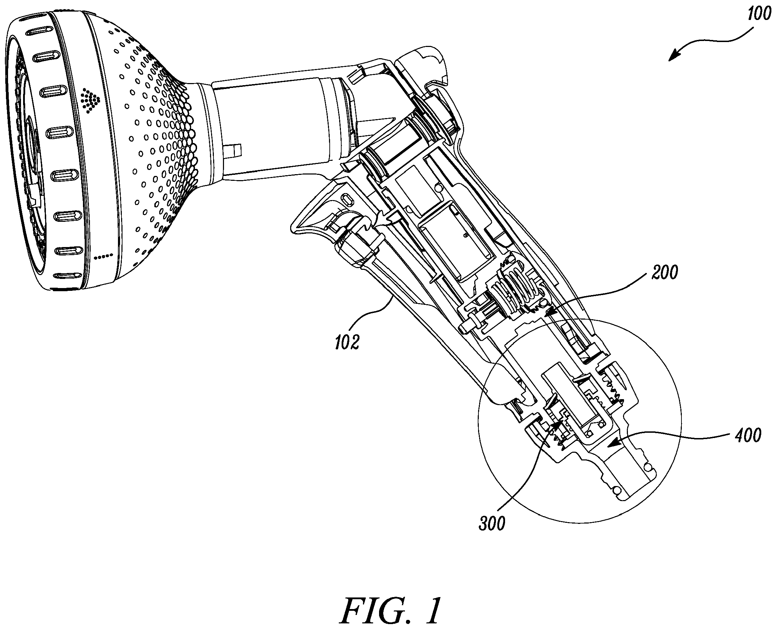

**FIG. 1** illustrates a fluid application assembly 100 according to an exemplary embodiment of the present invention. The fluid application assembly 100 includes a fluid outflow device 200. The fluid outflow device 200 may be used for providing fluid for various industrial and domestic applications such as, but not limited to, irrigation. The fluid is preferably a liquid and more preferably water as water is the most frequently used fluid for various applications such as watering of lawns, cleaning, firefighting among others. Thus, in the present disclosure, fluid or liquid may interchangeably be used for water and vice versa.

The fluid outflow device 200 is particularly a water application device such as a sprayer, a sprinkler, a shower head, a mist shower head, a spray gun, a drip-irrigation component or a coupling nipple 214 of a water socket 100 that may be used to spray, sprinkle, or simply provide water for different well-known applications in a non-restrictive manner. The fluid outflow device 200 shown in **FIG. 1** is a sprayer head.

The fluid application assembly 100 may receive water for operation from a water source (not shown). The water source may advantageously be provided with a valve such as to regulate the outflow of the water from the water source. Further, the water source may be provided with an automatic operatable accessory that may automatically regulate the outflow of the water from the water source. For example, the water source may be provided with a watering computer. The watering computer may allow and regulate outflow of the water from the water source depending upon the time of the day, preset water outflow timings, among other factors. The fluid application assembly 100 comprises the fluid outflow device 200, a fluid inflow device 400, and a pressure reducer assembly 300.

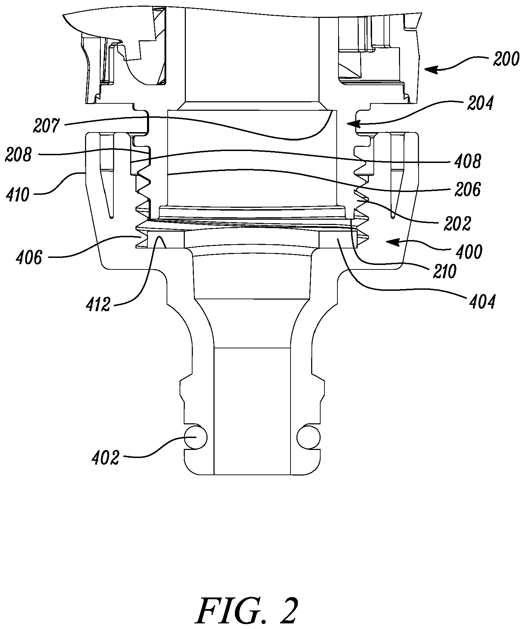

**FIG. 2** shows a cross-section view of a fluid coupling between a fluid outflow device 200 and a fluid inflow device 400 according to an exemplary embodiment of the present disclosure. The fluid outflow device 200 includes an inlet part 204 that includes an inner surface 206 and an outer surface 208. The inner surface 206 is disposed opposite to the outer surface 208. Additionally, the inlet part 204 comprises an axial sealing protrusion 207. An axial end face 210 seals against a further sealing element 404. A thread 202, particularly an outer thread 202 is formed on the outer surface 208, and extends over at least a part of the longitudinal/axial extension of the outer surface 208. The fluid inflow device 400, particularly a connector nipple, is fluidly coupled to the fluid outflow device 200 (as also shown in **FIG. 1****).** The fluid inflow device 400 includes an inner surface 408 and an outer surface 410. The inner surface 408 is disposed opposite to the outer surface 410. The inner surface 408 of the fluid inflow device 400 faces the outer surface 208 of the fluid outflow device 200 when the fluid inflow device 400 is fluidly coupled with the fluid outflow device 200. In other words, the outer surface 410 of the fluid inflow device 400 faces away from the outer surface 208 of the fluid outflow device 200 when the fluid inflow device 400 is fluidly coupled with the fluid outflow device 200.

The fluid inflow device 400 includes a plurality of threads or teeth 406 that engage with a corresponding plurality of threads or teeth 202 of the fluid outflow device 200 to form a fluid coupling between the fluid inflow device 400 and the fluid outflow device 200.

The fluid inflow device 400, as shown in **FIG. 2****,** is configured for coupling the fluid outflow device 200 to a water connection, particularly a hose (not shown) fluidly coupled with the water source. The fluid inflow device 400 in **FIG. 2** is a connector nipple. The fluid inflow device 400 includes an O-ring 402 for fluid tight coupling with the water connection such as the hose. The O-ring 402 is disposed in an annular channel provided on the outer surface 410 of the fluid inflow device 400. The fluid inflow device 400 may advantageously be designed to selectively allows passage of water therethrough (received from the water source) only when it is fluidly coupled with the fluid outflow device 200.

Further, as shown in **FIG. 2****,** a further sealing element 404 is positioned on a sealing surface 412 of the fluid inflow device 400. The further sealing element 404 on its radially outer surface contact the threads 406 formed on the inner surface 408. The further sealing element 404 may provide sealing using a sealing gasket or any other known and easily available sealing means (or sealing element). The further sealing element 404 as illustrated in **FIG. 2** is an axially flat sealing element 404. The further sealing element 404 may prevent leakage of water received from the water source via the fluid inflow device 400 towards the area of the fluid coupling between the fluid inflow device 400 and the fluid outflow device 200 and then further to the external environment.

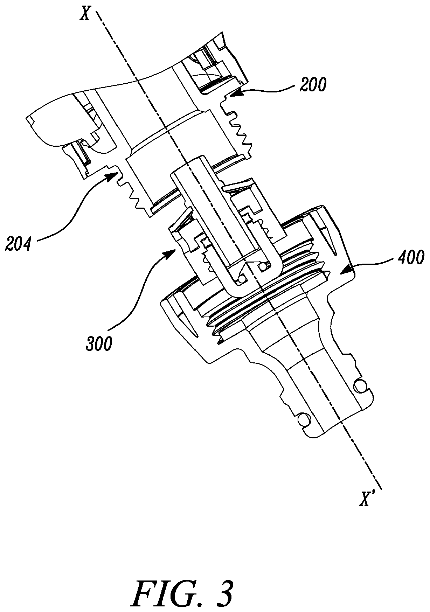

Further, water received from the water source may be provided at a pressure equal to or more than an output pressure requirement of the fluid outflow device 200. The pressure of the received water from the water source may fluctuate as well. The fluid application assembly 100 further includes a pressure reducer assembly 300 for reducing the pressure of water received from the water source as shown in **FIGS. 1****,** **3****,** **4A** and **4B****.** In the shown exemplary embodiment, the pressure reducer assembly 300 is placed proximate to or at the inlet part 204 of the fluid outflow device 200. The pressure reducer assembly 300 is placed between the fluid inflow device 400 and the fluid outflow device 200 as shown in **FIGS. 1****,** **3****,** **4A** and **4B****.** The pressure reducer assembly 300, the fluid inflow device 400 and the fluid outflow device 200 are all placed along a central axis X-X' (shown in **FIG. 3****).** However, it may be understood that the pressure reducer assembly 300, the fluid inflow device 400 and the fluid outflow device 200 may be placed along different axes as per the application requirement or feasibility constraints among other factors.

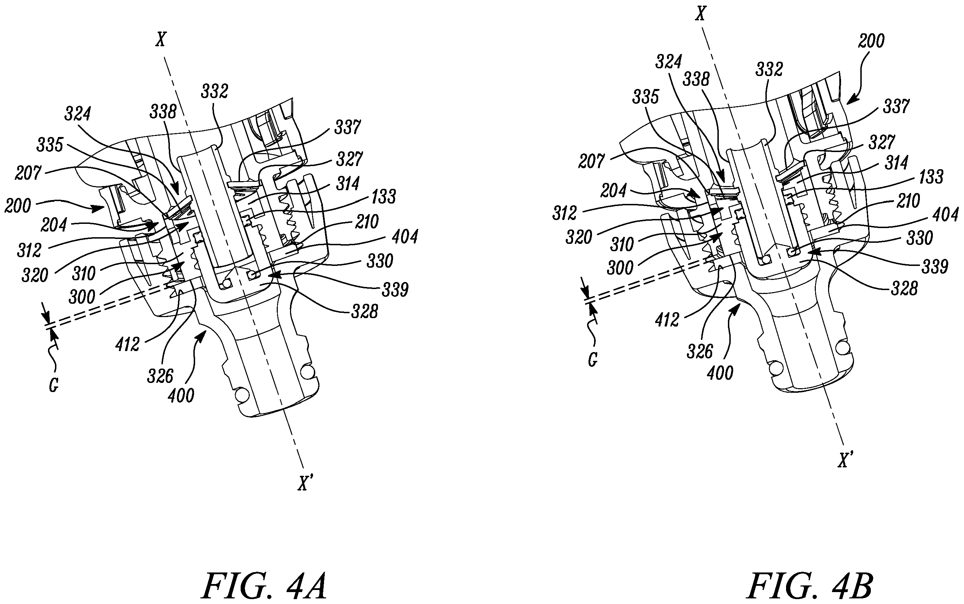

In a mounted state, as shown in **FIGS. 1****,** **4A** and **4B****,** the pressure reducer assembly 300 is completely enclosed by the fluid inflow device 400 and the fluid outflow device 200. The pressure reducer assembly 300 is annularly separated from the external environment by the fluid inflow device 400 and the fluid outflow device 200. The fluid outflow device 200 is in fluidically communication with the fluid inflow device 400 via the pressure reducer assembly 300. The pressure reducer assembly 300, the fluid inflow device 400 and the fluid outflow device 200 may together operate to provide efficient operation of the fluid application assembly 100.

The pressure reducer assembly 300 includes a pressure reducer body 310 (as shown in **FIGS. 4A** and **4B****).** The pressure reducer body 310 of the present disclosure is a cylindrical body having the central axis X-X' along a longitudinal respectively axial direction of the pressure reducer assembly 300. However, in an alternative implementation of the present disclosure, the pressure reducer body 310 may have any other shape without restricting the scope of the present disclosure. The pressure reducer body 310 may be made of brass, plastic, and/or aluminum. Various grades of stainless steel (such as 303, 304, and 316) may also be used for the manufacture of the pressure reducer body 310. However, any other material available to handle various fluids and operating environments may be employed for making or manufacturing the pressure reducer body 310. Further, any suitable manufacturing process may be employed for manufacturing of the pressure reducer body 310 without restricting the scope of the present disclosure.

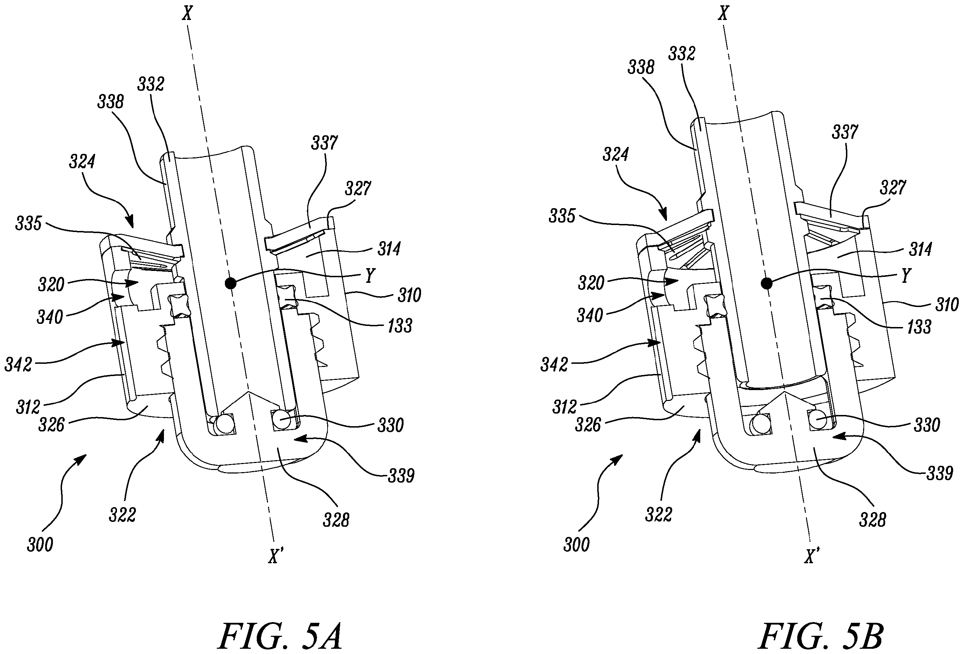

The pressure reducer body 310 includes an outer surface 312 and an inner surface 314 (as shown in **FIGS. 4A, 4B****,** **5A** and **5B****).** The outer surface 312 is disposed opposite to the inner surface 314. The outer surface 312 faces towards the inner surface 206 of the inlet part 204 of the fluid outflow device 200. The inner surface 314 of the pressure reducer body 310 faces away from the inner surface 206 (as shown in **FIGS. 4A** and **4B****)** of the fluid outflow device 200. The outer surface 312 of the pressure reducer body 310 and hence the pressure reducer body 310 itself is shielded by the inlet part 204 of the fluid outflow device 200 or the inner surface 206 of the fluid outflow device 200.

The outer surface 312 of the pressure reducer body 310 is configured to be screwlessly detachably mountable to the fluid outflow device 200. The outer surface 312 of the pressure reducer body 310 is formed smooth and without a thread and engages with the inner surface 206 of the fluid outflow device 200. The pressure reducer body 310 may be quickly and ergonomically mounted to the fluid outflow device 200 by providing its outer diameter adjusted to an inner diameter of the inlet part 204 of the fluid outflow device 200. In other words, the pressure reducer assembly 300 is detachably mounted, preferably screwless mounted, into the inlet part 204 of the fluid outflow device 200 such that an outlet section 324 of the pressure reducer assembly 300 is fluidically coupled to an inlet defined by the inlet part 204 of the fluid outflow device 200.

The further sealing element 404 mounted between the fluid inflow device 400 and the fluid outflow device 200 is clamped between the sealing surface 412 (as shown in **FIGS. 4A** and **4B****)** of the fluid inflow device 400 and a substantially planar axial inlet end face 326 of the pressure reducer body 310 (as shown in **FIGS. 4A, 4B****,** **5A** and **5B****).** The further sealing element 404 is sandwiched between the sealing surface 412 (as shown in **FIGS. 4A** and **4B****)** and the substantially planar axial inlet end face 326. The further sealing element 404 is firmly pressed in a direction parallel to the direction of the central axis X-X' by the fluid inflow device 400 and the pressure reducer body 310. The further sealing element 404 is axially pressed between the fluid inflow device 400 and the pressure reducer body 310 for sealing.

The further sealing element 404 according to the exemplary embodiment illustrated in **FIGS. 4A** and **4B****,** includes a larger radial extend than a radial extend of the pressure reducer body 310. The radial extend of the further sealing element 404 may depend on the application requirements among other factors.

The further sealing element 404 prevents leakage of water received via the fluid inflow device 400 and ensures efficient working of the pressure reducer assembly 300 and thus the fluid outflow device 200 on which the pressure reducer assembly 300 is mounted. The further sealing element 404 is configured to allow all the water received via the fluid inflow device 400 to reach the pressure reducer assembly 300 and not radially leak through towards the fluid coupling between the fluid outflow device 200 and the fluid inflow device 400. Furthermore, the further sealing element 404 in connection with the pressure reducer assembly 300 may be mounted together to the fluid outflow device 200 and the fluid inflow device 400 such that, in the mounted state, an axial air gap G is provided, which allows an increased air passage therethrough. The axial air gap G is provided between the axial inlet end face 326 of the pressure reducer body 320 and an axial end face 210 of the fluid outflow device 200. The pressure reducer assembly 300 is mounted to the fluid outflow device 200 such that the axial inlet end face 326 of the pressure reducer body 320 axially extends over the axial end face 210 of the fluid outflow device 200. Particularly, the axial inlet end face 326 axially extends over the axial end face 210 about 1 mm. Therefore, the axial air gap G is substantially 1 mm.

Further, the pressure reducer body 310 defines at least a part of a pressure reducer chamber 320 along the central axis X-X' (as shown in **FIGS. 4A, 4B****,** **5A** and **5B****).** The inner surface 314 of the pressure reducer body 310 defines an annular boundary wall for the pressure reducer chamber 320. The pressure reducer assembly 300 includes an inlet section 322 and an outlet section 324 fluidly coupled with the inlet section 322. The inlet section 322 is configured to allow an inflow of the fluid into the pressure reducer assembly 300, and the outlet section 324 is configured to allow an outflow of the fluid from the pressure reducer assembly 300. The pressure reducer chamber 320 extends between the inlet section 322 and the outlet section 324. As shown in **FIGS. 4A** and **4B****,** the inlet section 322 is parallel to respectively aligned with the outlet section 324. In an alternative embodiment, the inlet section 322 is non-parallel to respectively non-aligned with the outlet section 324. In an alternative embodiment, the outlet section 324 extends angled about an angle between 0 and 45 degrees with respect to an extension of the inlet section 322. In an alternative embodiment, the inlet section 322 and the outlet section 324 are at an offset relative to each other. The relative position of the inlet section 322 and the outlet section 324 may depend on application requirements, feasibility constraints, application device design, connecting element design or efficiency, among other factors. Additionally, as exemplarily illustrated in **FIGS. 4A** and **4B****,** the inlet section 322 is in direct fluid contact with the fluid inflow device 400, and the outlet section 324 is in direct fluid contact with the fluid outflow device 400.

Further, as shown in **FIGS. 4A, 4B****,** **5A** and **5B****,** the pressure reducer assembly 300 comprises a valve 328. The valve 328 is disposed at the inlet section 322 of the pressure reducer assembly 300 (as shown in **FIGS. 5A** and **5B****).** Further, the valve 328 selectively allows and disallows passage of water via the inlet section 322 through the pressure reducer assembly 300. The valve 328 selectively allows the passage of water to the outlet section 324 such as to support maintaining a constant output pressure of the pressure reducer assembly 300 and hence the fluid application assembly 100. Therefore, the valve 328 comprises a sealing seat 339 which is configured to allow and disallow a flow of fluid through the pressure reducer assembly 300. The sealing seat 339 is configured to interact with an end of the biasing means piston rod 322 to disallow a flow of fluid through the pressure reducer assembly 300.

As may be seen in **FIGS. 4A** and **4B****,** the valve 328 is mounted to the inlet section 322 by a threaded connection. In other words, the valve 328 is screwed to the inlet section 322. The screw connection/coupling between the valve 328 and the inlet section 322 may be established by corresponding threads on the one hand on the valve 328 and on the other hand on the pressure reducer body 310. Alternatively, the screw coupling may be established by screwing the valve 328 to an internal thread of the pressure reducer body 310 by simultaneously cutting a thread on the valve 328. Both may allow a movement of the valve 328 relative to the inlet section 322 along the longitudinal direction of the pressure reducer assembly 300 for example for adjusting purposes. The threaded connection/screw coupling between the valve 328 and the inlet section 322 allows for movement of the valve 328 relative to the inlet section 322 along the direction of the central axis X-X'. The movement of the valve 328 along the longitudinal direction of the pressure reducer assembly 300 may also help to adjust the constant output pressure generated by the pressure reducer assembly 300. The valve 328 further includes a seal 330. The seal 330 may be O-ring as shown in **FIGS. 4A, 4B****,** **5A** and **5B****.**

Furthermore, as illustrated in **FIGS. 4A, 4B****,** **5A** and **5B****,** the pressure reducer assembly 300 is toollessly detachably mounted to the fluid outflow device 200 and the fluid inflow device 400 as a whole.

In the exemplary embodiment as illustrated, namely, in **FIGS. 4A, 4B****,** **5A** and **5B****,** the valve 328 extends along the central axis X-X' of the pressure reducer body 310. In an alternative embodiment, the valve 328 may extend parallel to the central axis X-X' of the pressure reducer body 310. In a further alternative embodiment, the valve 328 may extend offset to the central axis X-X' of the pressure reducer body 310. In a yet further exemplary embodiment, the valve 328 may extend angular to the central axis X-X' of the pressure reducer body 310. The valve 328 may have orientation relative to the longitudinal direction of the pressure reducer body 310 without restricting the scope of the present disclosure in any manner.

According to an exemplary embodiment of the present disclosure, the inlet section 322 may include a filter element (not shown) located upstream of the valve 328. The valve 328 may be located downstream of the filter element in the direction of water flow. The filter element may be operatively coupled to the inlet section 322 such that the filter element filters water received from the water source before it enters the pressure reducer chamber 320. The filter element prevents clogging of the inlet section 322 and thereby promotes smooth operations of the pressure reducer assembly 300 and the fluid application assembly 100. The filter element may be coupled to the inlet section 322 by any means known in the related art. For example, the filter element may be glued to the inlet section 322.

Further, the filter element may have any shape, size, and type as per the application requirements. In an exemplary embodiment, the filter element may be a surface filter made of closely woven fabric or treated paper with a uniform pore size. Water from the water source flows through the pores of the filter element and contaminants are stopped on the filter element surface. In some embodiments, the filter element may be a depth filter made of layers of fabric or fibers, which provide many tortuous paths for the fluid to flow through. The pores or passages are larger than the rated size of the filter element for particles to be retained in the depth of the media rather than on the surface. In an exemplary embodiment, the filter element may be of the 5-micron, woven mesh, micronic, porous metal, or magnetic type. The micronic and 5-micron elements have non-cleanable filter media and may be disposed of when they are removed whereas the porous metal, woven mesh and magnetic filter elements are designed to be cleaned and reused.

With continuous reference to **FIGS. 4A, 4B****,** **5A** and **5B****,** the pressure reducer assembly 300 further includes a biasing means piston rod 332. The biasing means piston rod 332 is a hollow rod allowing passage of water of which the pressure is to be reduced in the pressure reducer assembly 300 from the inlet section 322 to the outlet section 324. The piston rod 332 has a center Y along the central axis X-X'. The piston rod 332 connects the inlet section 322 with the outlet section 324. The piston rod 332 allows a fluid, particularly water, to flow from the inlet section 322 towards the outlet section 324. The piston rod 332 is located downstream of the valve 328. When the valve 328 is in a closed position and inhibits a flow of water through the piston rod 332, the end of the biasing means piston rod 332 interacts with the sealing seat 339, and the seal 330 axially seals the piston rod 332, particularly an circular axial end face of the piston rod 332. Thereby, a flow of fluid through the piston rod 332 and hence through the pressure reducer assembly 300 is inhibited.

A spring element 334, 335 is the biasing means. The spring element 334, 335 is functionally coupled with the piston rod 332 and is configured to allow an axial movement of the piston rod 332 along the central axis X-X'. In an exemplary embodiment, the spring element 334, 335 wrap along the outer peripheral surface of the piston rod 332. In another exemplary embodiment, the biasing means may comprise a plurality of similar spring elements 334, 335 equidistantly positioned adjacent to each other along the outer peripheral surface of the piston rod 332 such that the plurality of spring elements 334, 335 are oriented along the longitudinal direction of the pressure reducer assembly 300. The spring element 334, 335 may provide enough spring force to operate the piston rod 332. The spring element 334, 335 may have length enough to generate strength to operate the piston rod 332. The spring element 334, 335 may not have strength more than what is required to operate the piston rod 332 as the greater strength of the spring element 334, 335 leads to greater installation space of the spring element 334, 335 and thus an unnecessary increase in size of the pressure reducer assembly 300.

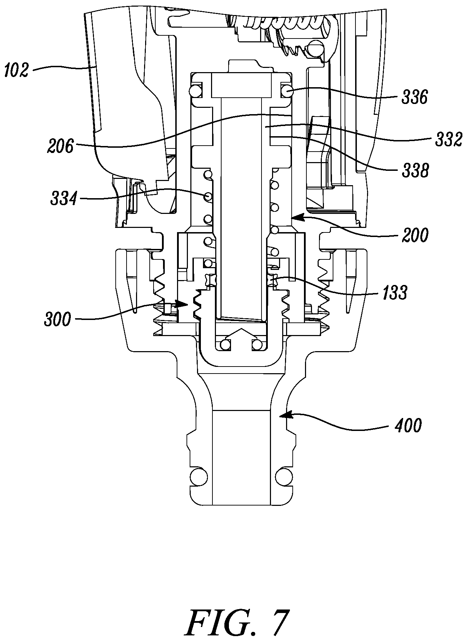

The spring element 334, 335 is a disc spring 335 (as shown in **FIGS. 4A, 4B****,** **5A, 5B** and **6****),** a compression spring 334 (as shown in **FIG. 7****),** or any other known type of spring element. Using the disc spring 335 may result in a compact structure and may be easily to manufacture at low costs.

As shown throughout the figures, the piston rod 332 may be concentric with the pressure reducer body 310 or the pressure reducer chamber 320. It should be emphasized that the piston rod 332 may alternatively have any other orientation relative to the earlier defined central axis X-X' in accordance with the operational feasibility of the pressure reducer assembly 300. The piston rod 332 of the present disclosure is moveable with respect to the pressure reducer body 310. The piston rod 332 is configured to oscillate back and forth substantially within the pressure reducer chamber 320. The piston rod 332 oscillates to momentarily block the supply of water from the inlet section 322 towards the outlet section 324. The back-and-forth motion of the piston rod 332 is due to differential force experienced by the piston rod 332. The piston rod 332 is forced to exhibit a downward stroke i.e., towards the inlet section 322, when the pressure at the outlet section 324 is larger than a predefined/preset constant output pressure. In other words, when the pressure at the outlet section 324 is larger than required for the application for which the pressure reducer assembly 300 is intended to be used. Further, the piston rod 332 exhibits an upward stroke i.e., towards the outlet section 324, when the pressure at the outlet section 324 is less than a predefined/preset constant output pressure. In other words, when the pressure at the outlet section 324 is less than the pre-set respectively predefined pressure of the pressure reducer assembly 300.

Further, according to the present invention, water in the outlet section 324 is prevented from leaking back to the pressure reducer chamber 320 by a sealing element 336, 337 operatively coupled with the piston rod 332. The sealing element 336, 337 is configured to form a sealing between the inner wall section 206, 207 of the inlet part 204 of the fluid outflow device 200 and an outer surface 338 of the piston rod 332 (as shown in **FIGS. 4A, 4B****,** **5A, 5B** and **6****)** at the outlet section 324 of the pressure reducer chamber 320. The sealing element 336, 337 disallows a backflow of water past the outlet section 324. Thereby, any possible leakage may be eliminated and the overall efficiency of the pressure reducer assembly 300 installed in the fluid outflow device 200 may be improved.

As shown particularly in **FIGS. 4A, 4B****,** **5A, 5B****,** and **6****,** the spring element 334, 335 is disc spring 335, and the sealing element 336, 337 is a diaphragm 337. The disc spring 335 supports the diaphragm 337 particularly over substantially an entire radial extend of the diaphragm 337. A shape of the disc spring 335 substantially corresponds to a shape of the diaphragm 337. The diaphragm 337 and the disc spring 335 both comprising the disc shape, may provide the advantage of a compact pressure reducer assembly design. The illustrated disc spring 335 prevents the diaphragm 337 from slipping out/folding down due to fluid force or water force. Thus, the diaphragm 337 in the pressure reducer assembly 300 is well supported by the disc spring 335. Additionally, a radial outer part of the disc spring 335 and a corresponding radial outer part of the diaphragm 337 are axially sealed by clamping them between the axial outlet end face 327 of the pressure reducer body 320 and the axial sealing protrusion 207 of the fluid outflow device 200. Thereby, the disc spring 335 and the diaphragm 337 are securely held in place.

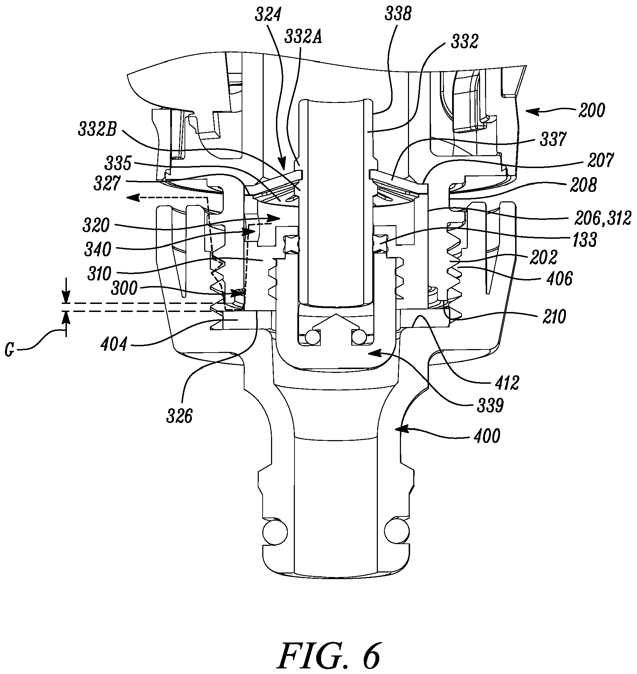

Further, as shown in **FIG. 6****,** an outer periphery of the diaphragm 337 is pressed or sandwiched by the pressure reducer body 310 and the fluid outflow device 200. Furthermore, an inner periphery of the diaphragm 337 is supported or sandwiched by a plurality of annular protrusions 332A, 332B formed on the outer surface 338 of the piston rod 332. The diaphragm 337 is well supported and stable against pressure differences in the pressure reducer chamber 320. The diaphragm 337 is prevented from any slippage or misplacement in the pressure reducer assembly 300 by virtue of the piston rod 332, the pressure reducer body 310, the fluid outflow device 200 and the disc spring 335.

The sealing element 336, 337 may be a diaphragm 337 (as shown in **FIG. 6****),** a lip seal, an O-ring 336 (as shown in **FIG. 7****),** or any other known type of the sealing element 336, 337 known and understood in the related art. However, in the exemplary embodiment as shown in **FIG. 6****,** the sealing element 336 is a diaphragm 337. For the purpose of the present disclosure, the sealing element 336, 337 is now interchangeably written as the diaphragm 337. The diaphragm 337 communicates an excess water pressure at the outlet section 324 to the piston rod 332 for downward stroke respectively a stroke in the direction towards the inlet section 322 of the pressure reducer assembly 300.

The diaphragm 337 allows the sealing between the inner wall section 206 of the inlet part 204 of the fluid outflow device 200 and the outer surface 338 of the piston rod 332 at the outlet section 324 of the pressure reducer chamber 320. The multiple usage or application of the diaphragm 337 means no separate sealing element such as an O-ring is required for the sealing. The diaphragm 337 provides an axial sealing between the outer surface 338 of the piston rod 332 and the axial sealing protrusion 207 of the fluid outflow device 200.

Referring to the differential force experienced by the piston rod 332. The force experienced by the piston rod 332 is caused by the spring element 334, 335 and the sealing element 336, 337 operatively coupled with the piston rod 332. The direction of motion of the piston rod 332 at any particular time instant is governed by the direction of net force generated upon the piston rod 332 by the spring force caused by the spring element 334, 335 and the fluid pressure force on the sealing element 337 or the circular axial end surface of the piston rod 332. For example, the piston rod 332 moves in upstream direction (as shown in **FIG. 4B****)** when the net force is in upstream direction due to higher amount of force generated by the fluid acting on the surface of the sealing element 337 or the circular axial end surface of the piston rod 332 relative to the spring force, particularly the restoring force, generated by the spring element 334, 335.

The constant output pressure generated by the pressure reducer assembly 300 may be adjusted by varying an initial distance or an initial gap between the piston rod 332 and the valve 328 and the seal 330 during the manufacturing of the pressure reducer assembly 300 or just before mounting the pressure reducer assembly 300 to the fluid outflow device 200. For example, the constant output pressure may be pre-determined and preset during the manufacturing of the pressure reducer assembly 300 according to the application requirements of the fluid outflow device 200 or the fluid inflow device 400 to which the pressure reducer assembly 300 is mounted. The pressure reducer assembly 300 is configured to generate a constant output pressure of at least 1.5 bar, particularly of at least 3 bar, more particularly of substantially 4 bar. Some applications may demand a constant output pressure of 4 bar while other applications such as drip heads and spray nozzles used for gardening operations may demand a constant output pressure of 1.5 bar. Accordingly, the initial distance or the initial gap between the piston rod 332 and the valve 328 and the seal 330 is increased for generating a constant output pressure of 4 bar while it is comparatively reduced for generating a constant output pressure of 1.5 bar.

With continuous reference to **FIGS. 5A, 5B** and **6****,** the pressure reducer assembly 300 includes the pressure reducer body 310 which further includes a pressure compensation hole 340. The pressure compensation hole 340 connects the pressure reducer chamber 320 and the outer surface 312 of the pressure reducer body 310. The pressure compensation hole 340 may ensure unrestricted mobility of the piston rod 332. The pressure compensation hole 340 allows release of air pressure generated in the pressure reducer chamber 320 when the piston rod 332 moves in an upstream direction seen in a flow direction of the fluid through the pressure reducer assembly 300. Therefore, the pressure compensation hole 340 allows air to flow out of the pressure reducer chamber 320 when the piston rod 332 moves in the upstream direction (as shown in **FIGS. 4B** and **5A****).** Conversely, the pressure compensation hole 340 allows suction of surrounding air (external to the pressure reducer assembly 300 respectively the pressure reducer chamber 320) when the piston rod 332 moves in a downstream direction seen in a flow direction of the fluid through the pressure reducer assembly 300 (as shown in **FIG. 4A** and **5B****).** Further, the sealing element 336, 337 may prevent ingress of air from the pressure reducing chamber 320 into the outlet section 324, thereby preventing mixing of air drawn-in from the pressure compensation hole 340, with water in the outlet section 324.

As illustrated in **FIG. 6****,** air in the pressure reducer chamber 320 surrounding the spring-operated piston rod 332 is sealed from the valve 328 using a sealing element 133. The sealing element 133 prevents mixing of air in the pressure reducer chamber 320 with the fluid introduced in the pressure reducer assembly 300 via the inlet section 322. The sealing element 133 may be an O-ring. Alternatively, the sealing element 133 may be any other commonly available sealing element know in the art without restricting the scope of the resent disclosure.

The pressure reducer assembly 300 is configured such that, when the pressure reducer assembly 300 is mounted to the fluid outflow device 200 and the fluid inflow device 400, an air pressure inside of the pressure reducer chamber 320 is compensable, particularly exclusively, via the pressure compensation hole 340 and complementary threads 202 and 406 of the fluid outflow device 200 and the fluid inflow device 400 (as shown by arrow in **FIG. 6****).** Additionally, the pressure reducer assembly 300 is formed to be toollessly detachably mounted into the inlet part 204 of the fluid outflow device 200 such that an air pressure inside of the pressure reducer chamber 320 is compensable via the pressure reducer hole 340 and complementary thread 202 of the fluid outflow device 200 and thread 406 of the fluid inflow device 400.

The pressure compensation route shown in **FIG. 6** involves the pressure compensation hole 340 followed by a pressure compensation groove 342 (shown in **FIGS. 5A** and **5B****)** formed in the outer surface 312 of the pressure reducer body 310, which is further followed by an axial air gap G formed between the further sealing element 404 respectively the axial outlet end face 327 of the pressure reducer body 320, and the axial end face 210 of the fluid outflow device 200. The axial air gap G is further followed by the fluid coupling between the complementary threads 202, 406 of the fluid outflow device 200 and the fluid inflow device 400. In other words, the pressure compensation may be established from the pressure compensation hole 340 via the axial air gap G and the complementary threads 202, 406 of the fluid outflow device 200 and the fluid inflow device 400.

The pressure compensation route may be seen as the passage where the air flows through during a pressure compensation. Further, the pressure compensation route is such that air coming out of the pressure compensation hole 340 is guided around substantially a 90-degree turn in the upstream direction of water flow followed by a 180-degree turn around the axial air gap G which is further followed by another 90-degree turn to reach the environment outside the fluid application assembly 100. The pressure compensation hole 340 and therewith the passage of the air through the pressure compensation hole 340, the axial air gap G and the complementary threads 202 and 406, is configured for compensating pressure changes in the pressure reducer chamber 320 caused by an oscillating movement of the piston rod 332 and caused by the spring element 334, 335. Thereby, energy or pressure of the air may be reduced as well as noise from the pressurized air which may release out of the pressure reducer chamber 320 and hence the fluid application assembly 100, may be reduced. However, it is inhibited that air flowing out of the pressure compensation hole 340 reaches the outlet section 324 of the pressure reducer assembly 300 by a sealing formed by virtue of the fluid tight coupling between the pressure reducer body 310 and the axial sealing protrusion 207 of the fluid outflow device 200 and further with the help of the diaphragm 337 pressed between the pressure reducer body 310 and the fluid outflow device 200.

According to the exemplary embodiment shown in **FIG. 5A** and **5B****,** the pressure compensation groove 342 formed on the outer surface 312 of the pressure reducer body 310 may be formed linear. According to an alternative embodiment of the present invention, the pressure compensation groove 342 on the outer surface 312 of the pressure reducer body 310 may be a non-linear groove. The groove design may depend on the application requirements among other factors. The pressure compensation groove 342 forms a void space between the inner surface 206 of the fluid outflow device 200 and the outer surface 312 of the pressure reducer body 310 which may improve a flow of air out and in the pressure compensation hole 340 respectively through the pressure compensation route.

Further, the outer surface 208 of the fluid outflow device 200 is formed without a pressure compensation bore such that no unwanted foreign element clogs the pressure compensation hole 340 formed in the pressure reducer body 310 and affect the working of the pressure reducer assembly 300 mounted in the fluid outflow device 200. Additionally, the outer surface 208 of the fluid outflow device 200 being formed without a pressure compensation bore may ensure that the pressure reducer assembly 300 may be included in different fluid outflow devices 200.

In operation, an operator of the fluid application assembly 100 of **FIG. 1****,** presses a lever 102 (as shown in **FIGS. 1** and **7****)** for actuation of the lever 102. Upon actuation, water from the water sources reaches the pressure reducer assembly 300 mounted in the fluid outflow device 200 via the fluid inflow device 400. The pressure reducer assembly 300 reduces the water pressure to constant reduced and predetermined pressure for further usage in various domestic and industrial applications.

Thus, the present disclosure provides an improved pressure reducer assembly 300 that may be simple in construction and may be easy to install or mount in the fluid outflow device 200. The pressure reducer assembly 300 may be advantageously designed in a manner such that the pressure compensation hole 340 may not be directly exposed to the external environment. The pressure compensation hole 340 may be enclosed or covered by the fluid outflow device 200 and the fluid inflow device 400, which may thereby provide the protection to the pressure compensation hole 340 against foreign elements present in the surroundings or the external environment of the fluid outflow device 200 and the fluid inflow device 400. The pressure compensation hole 340 may thus be prevented from clogging due to dirt, sand, etc. The pressure compensation hole 340 may thereby allow or ensure unobstructed mobility of the piston rod 332 in the pressure reducer chamber 320 and hence the efficient working of the pressure reducer assembly 300 in different types of fluid outflow devices 200.

The fluid application assembly 100 as illustrated in **FIG. 7** comprises the fluid inflow device 400, the fluid outflow device 200 and the pressure reducer assembly 300 mounted to the fluid outflow device 200. The pressure reducer assembly 300 comprises a compression spring 334 as the spring element 334, 335, and an O-ring 336 as the sealing element 336, 337. The compression spring 334 allows an axial movement of the piston rod 332 for pressure compensation. The O-ring 336 provides a radial sealing between a planar inner surface 206 of the fluid outflow device 200 and the outer surface 338 of the piston rod 332 at the outlet section 324 of the pressure reducer chamber 320.

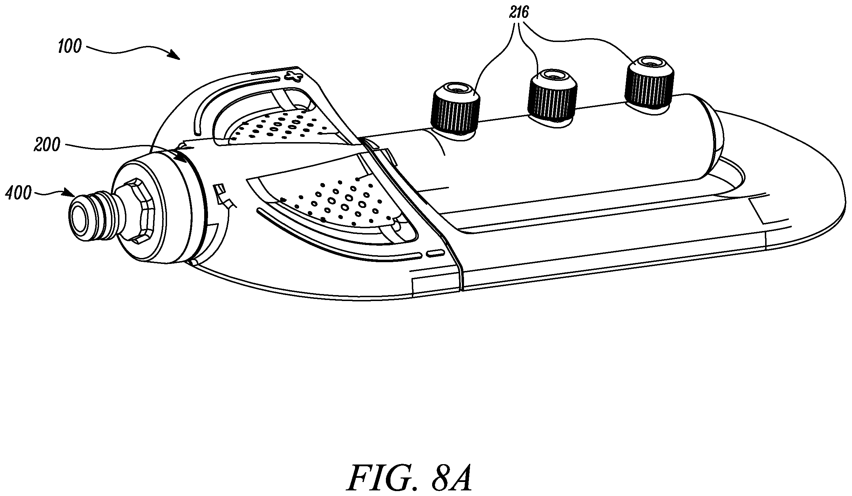

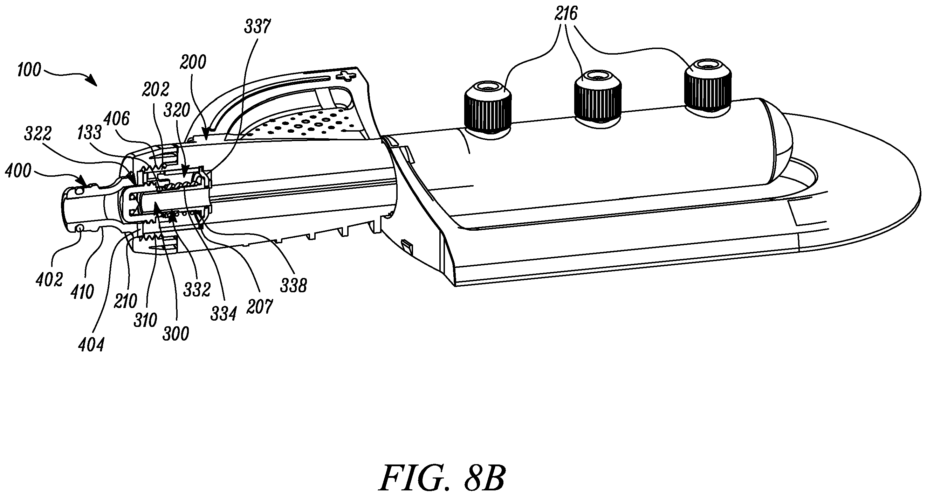

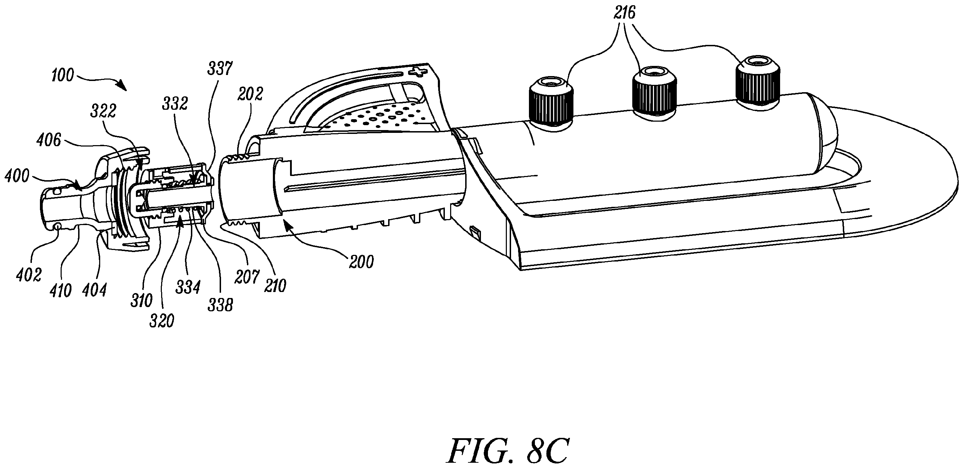

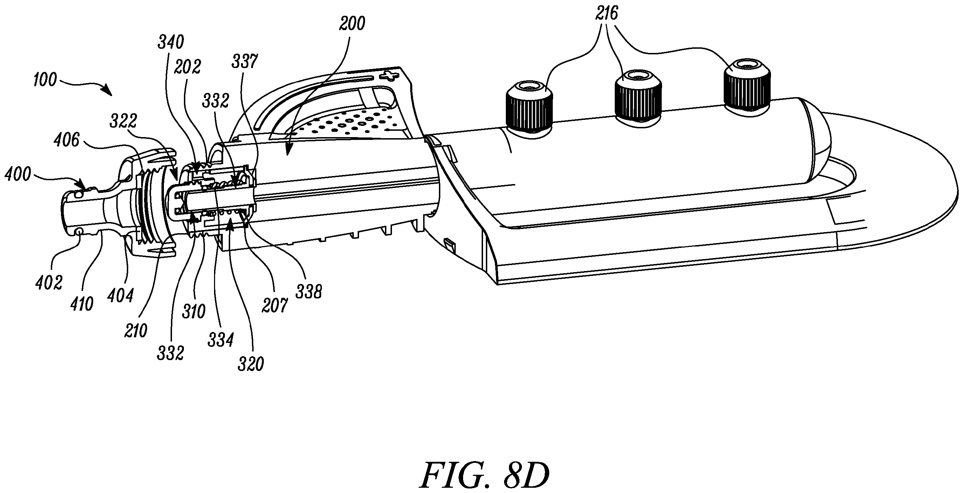

The fluid application assembly 100 as illustrated in **FIGS. 8A****,** **8B****,** **8C** and **8D** is a mist shower and comprises the fluid inflow device 400, the fluid outflow device 200 and the pressure reducer assembly 300 mounted to the fluid outflow device 200. The fluid outflow device 200 is configured to guide an outflow of the fluid from the pressure reducer assembly 300. The fluid outflow device 200 shown in **FIGS. 8A** to **8D** is a mist shower head 200. The mist shower head 200 may be disposed on a ground surface to generate and spray regulated mist flow for different well-known applications in a non-restrictive manner. The mist shower head 200 comprises a plurality of nozzles 216 to spray a mist flow. Each of the plurality of nozzles 216 may have similar or different outflow diameter as per the application requirements. Further, each of the plurality of nozzles 216 may have different outflow cross-sections relative to each other.

The fluid outflow device 200 receives water for generating and spraying of a mist flow from the fluid inflow device 400 via the pressure reducer assembly 300. The fluid inflow device 400 is configured for fluidly coupling the fluid outflow device 200 to the water connection, particularly the hose or pipe line fluidly coupled with the water source and further configured to guide an inflow of the fluid or water to the pressure reducer assembly 300. The fluid inflow device 400 is a connector nipple 400 and includes an O-ring 402 disposed in an annular channel provided on an outer surface 410 of the connector nipple 400. The O-ring 402 provides a fluid tight coupling with the water connection such as a hose, to substantially minimize or reduce a potential wastage of water.

Further, as discussed earlier with respect to the exemplary embodiment as illustrated in **FIG. 2****,** the plurality of threads or teeth 406 of the fluid inflow device 400 engages with a corresponding plurality of threads or teeth 202 of the fluid outflow device 200 to form a fluid coupling between the fluid inflow device 400 and the fluid outflow device 200, as shown in **FIG. 8B****.** Similarly, as disclosed earlier with respect to the exemplary embodiment as illustrated in **FIGS. 1****,** **4A** and **4B****,** in the mounted state, the pressure reducer assembly 300 is completely enclosed by the fluid inflow device 400 and the fluid outflow device 200, as shown in **FIG. 8B****.** Further, the pressure reducer assembly 300 is substantially similar in design compared to the pressure reducer assembly 300 shown in **FIGS. 5A** and **5B** and is mounted in a similar manner as shown in **FIG. 6****.** The pressure reducer assembly 300 comprises a compression spring 334 as the spring element 334, 335, and a diaphragm 337 as the sealing element 336, 337. The compression spring 334 allows an axial movement of the piston rod 332 for pressure compensation. The diaphragm 337 provides an axial sealing between the outer surface 338 of the piston rod 332 and the axial sealing protrusion 207 of the fluid outflow device 200.

Further, the pressure reducer body 310 includes the pressure compensation hole 340 located proximate to the inlet section 322 of the pressure reducer chamber 320 due to the substantially longer length of the compression spring 334 relative to the disc spring 335 (as shown in the embodiment illustrated in **FIG. 6****).** Thus, the air pressure inside of the pressure reducer chamber 320 is compensable, particularly exclusively, via the pressure compensation hole 340 and complementary threads 202 of the mist shower 200 and threads 406 of the connector nipple 400. The pressure compensation is further supported or promoted by the axial air gap G formed between the further sealing element 404 and the axial end face 210 of the mist shower 200.

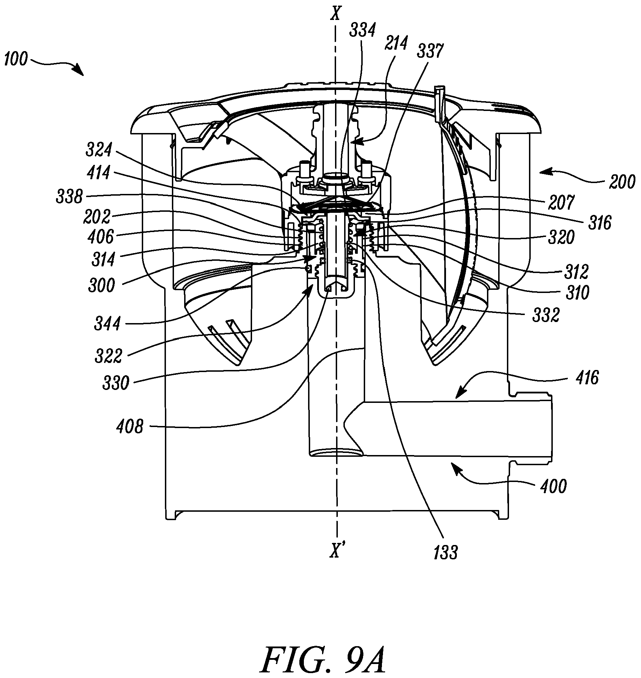

**FIG. 9A** illustrates a cross-section view of the fluid application assembly 100 being a water socket 100 according to another exemplary embodiment of the present invention. The water socket 100 comprises a coupling nipple 214 as the fluid outflow device 200 and a water supply line 416 as the fluid inflow device 400. The water supply line 416 may be fluidly coupled to an external source of water respectively a water connection. The water supply line 416 conveys water received from the water source to the coupling nipple 214 of the water socket 100. The fluid outflow device 200 (particularly the water connection part respectively the coupling nipple 214 of the water socket 100) is mounted, particularly screwed, to the fluid inflow device 400 (particularly the water supply line 416) using the complementary threads 202 of the fluid outflow device 200 and threads 406 of the fluid inflow device 400, respectively. As illustrated in **FIG. 9A****,** the fluid inflow device 400 is the water supply line 416 and the fluid outflow device 200 is the coupling nipple 214.

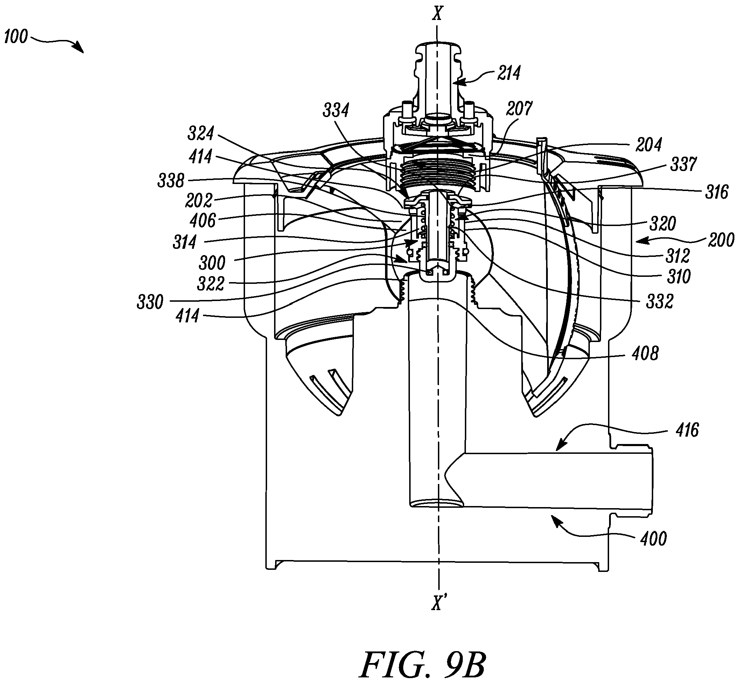

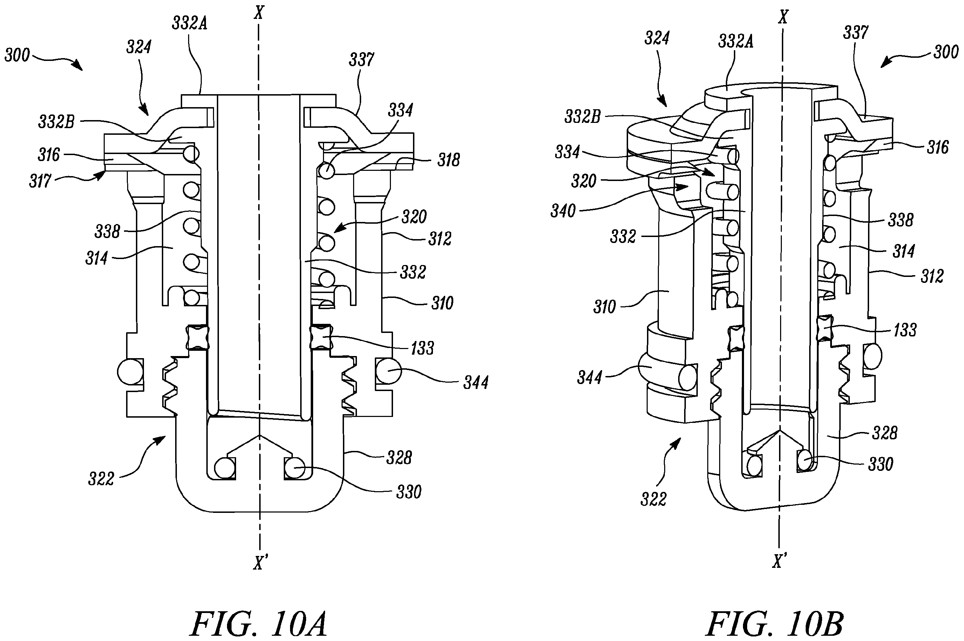

The fluid outflow device 200 and the fluid inflow device 400 enclose the pressure reducer assembly 300 upon coupling. In other words, the pressure reducer assembly 300 is mounted between the fluid outflow device 200 and the fluid inflow device 400 and is annularly separated from the external environment by the fluid inflow device 400 and the fluid outflow device 200. The pressure reducer assembly 300 regulates the pressure of water flowing from the water supply line 416 towards the coupling nipple 214. **FIG. 9B** shows an exploded view of the water socket 100 being the fluid application device 100 of **FIG. 9A****.** Further, the pressure reducer assembly 300 of this exemplary embodiment is illustrated in **FIG. 10A** and **10B****.** The pressure reducer assembly 300 as illustrated in **FIG. 10A** and **10B** is substantially similar to the one illustrated in **FIGS. 5A** and **5B** with slight deviation in design as per the installation requirements in the water socket 100.

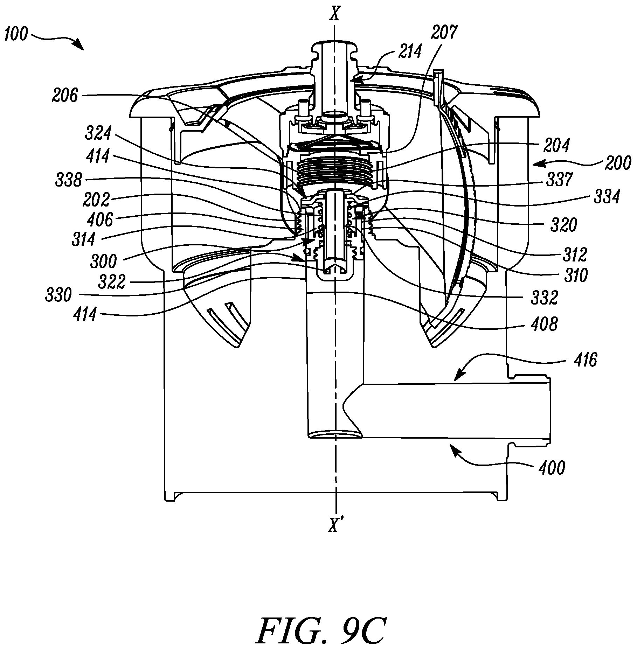

The pressure reducer assembly 300 comprises the pressure reducer body 310 having a central axis X-X' along the longitudinal direction of the pressure reducer assembly 300. The pressure reducer body 310 comprises the outer surface 312 and the inner surface 314. The outer surface 312 of the pressure reducer body 310 is configured to be screw-lessly mountable to the water supply line 416 respectively the fluid inflow device 400 as shown in **FIGS. 9A** and **9C****.** Further, a gasket 344 is held in an annular cavity in the pressure reducer body 310 and radially seals and prevents leakage of water received from the water source. Further, the pressure reducer body 310 defines at least a part of a pressure reducer chamber 320 along the central axis X-X'. The inner surface 314 of the pressure reducer body 310 defines an annular boundary wall for the pressure reducer chamber 320. The pressure reducer chamber 320 includes an inlet section 322 and an outlet section 324 fluidly coupled with the inlet section 322.

Further, the pressure reducer assembly 300 includes a valve 328 disposed at the inlet section 322 of the pressure reducer chamber 320. The valve 328 is configured to selectively allow and disallow a flow of fluid (particularly water) through the pressure reducer assembly 300. The valve 328 may be coupled to the inlet section 322 by any suitable means known in the art. However, in the exemplary embodiment, the valve 328 is screwed to the inlet section 322. The valve 328 further includes the seal 330. The seal 330 as illustrate, e.g., in **FIGS. 10A** and **10B** illustrated embodiment is an O-ring.

With continuous reference to **FIGS. 9A****,** **9B****,** **9C****,** **10A** and **10B****,** the pressure reducer assembly 300 further includes a biasing means piston rod 332. The piston rod 332 is a hollow piston rod 332 allowing passage of water of which the pressure is to be reduced in the pressure reducer assembly 300. The piston rod 332 connects the inlet section 322 with the outlet section 324 and allows a fluid, particularly water, to flow from the inlet section 322 towards the outlet section 324. The piston rod 332 is located downstream of the valve 328 such that the seal 330 axially seals the piston rod 332.

Further, the compression spring 334 is functionally coupled with the piston rod 332 and is configured to allow an axial movement of the piston rod 332 along the central axis X-X'. The piston rod 332 is configured to oscillate back and forth substantially within the pressure reducer chamber 320. The piston rod 332 oscillates to momentarily reduce respectively block the supply of water from the inlet section 322 towards the outlet section 324. The back-and-forth motion of the piston rod 332 is due to differential force experienced by the piston rod 332.

Further, water in the outlet section 324 is prevented from leaking back to the pressure reducer chamber 320 by the diaphragm 337 operatively coupled with the piston rod 332. The diaphragm 337 is configured to form the sealing between the inner wall section 206 of the inlet part 204 of the fluid outflow device 200 being the coupling nipple 214, and the outer surface 338 of the piston rod 332 at the outlet section 324 of the pressure reducer chamber 320.

Referring to the differential force experienced by the piston rod 332, the force experienced by the piston rod 332 is caused by the compression spring 334 and the diaphragm 337 operatively coupled with the piston rod 332 in the pressure reducer chamber 320. The direction of motion of the piston rod 332 at any particular time instant is governed by the direction of net force generated upon the piston rod 332 by the spring force caused by the compression spring 334 and the fluid pressure force on the diaphragm 337.

Further, the inner periphery of the diaphragm 337 is securely held in place by the plurality of annular protrusions 332A, 332B formed on the outer surface 338 of the piston rod 332.

As illustrated in **FIGS. 10A** and **10B****,** the pressure reducer body 310 additionally comprises a collar 316. The collar 316 has a larger radial extend than a circular outer surface 312 of the pressure reducer body 310. The collar 316 is formed at an axial end 318 of the pressure reducer body 310 adjacent to the outlet section 324 of the pressure reducer chamber 320. The collar 316 supports the pressure reducer assembly 300 on the fluid inflow device 400. Further, when the fluid outflow device 200 is mounted to the fluid inflow device 400, the collar 316 is axially clamped or sandwiched between an axial end face 414 of the fluid inflow device 400 and the diaphragm 337. Thus, the diaphragm 337 is additionally supported and securely held in place by the collar 316 and the axial sealing protrusion 207 of the fluid outflow device 200 when the fluid outflow device 200 is mounted to the fluid inflow device 400.

According to an exemplary embodiment, the collar 316 further includes a groove 317 such that the groove 317 extends over the entire radial extend of the collar 316. The groove 317 may preferably have a circular cross-section. However, any other cross-section is within the scope of the present disclosure.

The pressure compensation is established from the pressure compensation hole 340 via the groove 317, and the complementary threads 202, 406 of the fluid outflow device 200 and the fluid inflow device 400, respectively. Thereby, the groove 317 provides the passage between the pressure compensation hole 340 and the complementary threads 202, 406 for allowing air to flow out of the pressure reducer chamber 320 when the piston rod 332 moves in the upstream direction.

Therefore, the pressure reducer assembly 300 may be reliably mounted to the fluid application assembly 100 and a constant pressure may be reliably providable. Furthermore, an ingress of foreign elements into the pressure reducer chamber 320 may be reduced and therefore a service life of the pressure reducer assembly 300 and also the entire fluid application assembly 100 may at least be increased.

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- 100: fluid application assembly / water socket
- 133: sealing element
- 200: fluid outflow device
- 202: plurality of threads or teeth of the fluid outflow device
- 204: inlet part of the fluid outflow device
- 206: inner wall section / inner surface of the fluid outflow device
- 207: inner wall section / axial sealing protrusion of the fluid outflow device
- 208: outer surface
- 210: axial end face of the fluid outflow device
- 300: pressure reducer assembly
- 310: pressure reducer body
- 312: outer surface of the pressure reducer body
- 314: inner surface of the pressure reducer body
- 316: collar
- 317: groove
- 320: pressure reducer chamber
- 322: inlet section of the pressure reducer chamber
- 324: outlet section of the pressure reducer chamber
- 326: axial inlet end face of the pressure reducer body
- 327: axial outlet end face of the pressure reducer body
- 328: valve
- 330: seal
- 332: piston rod
- 332A, 332B: annular protrusions
- 334: spring element / compression spring
- 335: spring element / disc spring
- 336: sealing element/ O-ring
- 337: sealing element / diaphragm
- 338: outer surface
- 339: sealing seat
- 340: pressure compensation hole
- 342: pressure compensation groove
- 400: fluid inflow device
- 402: O-ring
- 404: further sealing element
- 406: plurality of threads or teeth
- 408: inner surface of the fluid inflow device
- 410: outer surface of the fluid inflow device
- 412: sealing surface of the fluid inflow device
- 414: axial end face of fluid inflow device
- X-X': central axis
- Y: center
- G: axial air gap

## Claims

1. A pressure reducer assembly (300) for reducing a pressure of a fluid, preferably a liquid, more preferably water, comprising:
a pressure reducer body (310) defining at least a part of a pressure reducer chamber (320) along a central axis (X-X'), wherein the pressure reducer assembly (300) comprises an inlet section (322) and an outlet section (324) fluidly coupled with the inlet section (322), wherein the inlet section (322) is configured to allow an inflow of the fluid, and wherein the outlet section (324) is configured to allow an outflow of the fluid,
a biasing means piston rod (332) having a center (Y) along the central axis (X-X'), connecting the inlet section (322) with the outlet section (324), and wherein the biasing means piston rod (332) is moveable with respect to the pressure reducer body (310), and
a sealing element (336, 337) operatively coupled with the piston rod (332), wherein the sealing element (336, 337) is configured to form a sealing between an inner wall section (206, 207) of a fluid outflow device (200) and an outer surface (338) of the piston rod (332) at the outlet section (324),
wherein the pressure reducer body (310) comprises a pressure compensation hole (340),
wherein the pressure compensation hole (340) connects the pressure reducer chamber (320) and an outer surface (312) of the pressure reducer body (310), wherein the pressure reducer assembly (300) further comprises a valve (328) at the inlet section (322), comprising a sealing seat (339) which is configured to selectively interact with an end of the biasing means piston rod (322) to disallow a flow of fluid through the pressure reducer assembly (300),
**characterized in that**:
the valve (328) is mounted to the pressure reducer body (310),
wherein the pressure reducer assembly (300) is configured to be, particularly toollessly, detachably mounted to the fluid outflow device (200) and a fluid inflow device (400) such that such that an air pressure inside of the pressure reducer chamber (320) is compensable via the pressure compensation hole (340) and complementary threads (202, 406) of the fluid outflow device (200) and the fluid inflow device (400).

2. The pressure reducer assembly (300) according to claim 1,
wherein the pressure reducer body (310), particularly the outer surface (312) of the pressure reducer body (310), is configured to be screwlessly detachably mountable to the fluid outflow device (200), particularly a water application device and/or the fluid inflow device (400), particularly a water supply line (416) of a water socket (100).

3. The pressure reducer assembly (300) according to claim 1 or 2,
wherein the pressure reducer body (310) comprises the outer surface (312) and an inner surface (314), and
wherein the pressure reducer body (310) extends between the outer surface (312) and the inner surface (314) as a solid body and without a void or a larger opening.

4. The pressure reducer assembly (300) according to any one of the preceding claims.
wherein the outer surface (312) of the pressure reducer body (310) is formed smooth and without a thread.

5. The pressure reducer assembly (300) according to any one of the preceding claims, further comprising:
a spring element (334, 335) as being the biasing means, wherein the spring element (334, 335) is functionally coupled with the piston rod (332), and wherein the spring element (334, 335) is configured to allow an axial movement of the piston rod (332) along the central axis (X-X').

6. The pressure reducer assembly (300) according to claim 5,
wherein the spring element (334, 335) is a disc spring (335).

7. The pressure reducer assembly (300) according to claim 6,
wherein the sealing element (336, 337) is configured to form a axial sealing between the inner wall section (206, 207), particularly an axial sealing protrusion (207), of the fluid outflow device (200) and the outer surface (338) of the piston rod (332) at the outlet section (324) of the pressure reducer assembly (300), and/or
wherein the sealing element (336, 337) is a diaphragm (337).

8. The pressure reducer assembly (300) according to claim 5,
wherein the spring element (334, 335) is a compression spring (334).

9. The pressure reducer assembly (300) according to any one of the preceding claims,
wherein the sealing element (336, 337) is configured to form a radial sealing between the inner wall section (206, 207), particularly a planar inner surface (206), of the fluid outflow device (200) and the outer surface (338) of the piston rod (332) at the outlet section (324) of the pressure reducer chamber (320), and/or
wherein the sealing element (336, 337) is a O-ring (336).

10. The pressure reducer assembly (300) according to any one of claims 1 to 8,
wherein the sealing element (336, 337) is configured to form an axial sealing between the inner wall section (206, 207), particularly an axial sealing protrusion (207), of the fluid outflow device (200) and the outer surface (338) of the piston rod (332) at the outlet section (324) of the pressure reducer chamber (320), and/or
wherein the sealing element (336, 33) is a diaphragm (337).

11. The pressure reducer assembly (300) according to any one of the preceding claims,
wherein the pressure reducer assembly (300) is configured to generate a constant output pressure of at least 1.5 bar, particularly of at least 3 bar, more particularly of substantially 4 bar.

12. The pressure reducer assembly (300) according to any one of the preceding claims,
wherein the pressure reducer body (310) comprises a collar (316) having a larger radial extend than an outer surface (312) of the pressure reducer body (310), wherein the collar (316) is formed at an axial end (318) of the pressure reducer body (310) adjacent to the outlet section (324) of the pressure reducer assembly (300), and
wherein a groove (317) is formed in the collar (316),
wherein the groove (317) extends over the entire radial extend of the collar (316), and wherein the groove (317) is formed to communicate with the complementary threads (202, 406) of the fluid outflow device (200) and the fluid inflow device (400).

13. A fluid application assembly (100) comprising
a pressure reducer assembly (300) according to any one of the preceding claims,
the fluid outflow device (200) configured to guide an outflow of the fluid from the pressure reducer assembly (300),
wherein the fluid outflow device (200) is particularly a sprayer, a sprinkler, a shower head, a mist shower head, a spray gun, a drip-irrigation component or a coupling nipple (214) of a water socket (100), and
the fluid inflow device (400) configured to couple the fluid outflow device (200) to a fluid connection, particularly a hose or a pipe line, and wherein the fluid inflow device (400) is configured to guide an inflow of the fluid to the pressure reducer assembly (300),
wherein the fluid inflow device (400) is particularly a connector nipple or a water supply line (416) of a water socket (100),
wherein the pressure reducer assembly (300) is, particularly toollessly, detachably mounted into the inlet part (204) of the fluid outflow device (200) such that the outlet section (324) of the pressure reducer assembly (300) is fluidically coupled to the inlet part (204) of the fluid outflow device (200) or wherein the pressure reducer assembly (300) is mounted, preferably screw-less mounted, into an outlet part of the fluid inflow device (400) such that the inlet section (322) of the pressure reducer assembly (300) is fluidically coupled to the outlet part of the fluid inflow device (200).

14. The fluid application assembly (100) according to claim 13,
wherein the fluid outflow device (200) is mounted, particularly screwed, to the fluid inflow device (400) such that an axial inlet end face (326) of the pressure reducer body (300) seals with a sealing surface (412) of the fluid inflow device (400), particularly by a further sealing element (404), more particularly by an axial flat seal (404), wherein an axial air gap (G) is formed between the axial inlet end face (326) of the pressure reducer body (310) and an axial end face (210) of the fluid outflow device (200), and
wherein a pressure compensation is established from the pressure compensation hole (340) via the axial air gap (G) and the complementary threads (202, 406) of the fluid outflow device (200) and the fluid inflow device (400).

15. The fluid application assembly (100) according to claim 13,
wherein the fluid outflow device (200) is mounted, particularly screwed, to the fluid inflow device (400) such that a collar (316) is axially clamped between an axial end face (414) of the fluid inflow device (400) and the sealing element (337),
wherein the collar (316) has a larger radial extend than an outer surface (312) of the pressure reducer body (310), and is formed at an axial end (318) of the pressure reducer body (310) adjacent to the outlet section (324) of the pressure reducer chamber (320), wherein a groove (317) is formed in the collar (316), and extends over the entire radial extend of the collar (316), and wherein the groove (317) communicates with the complementary threads (202, 406) of the fluid outflow device (200) and the fluid inflow device (400),
wherein a pressure compensation is established from the pressure compensation hole (340) via the groove (317), and the complementary threads (202, 406) of the fluid outflow device (200) and the fluid inflow device (400).
